Europäisches Patentamt

European Patent Office

Office européen des brevets

(19)

(11) Veröffentlichungsnummer : **0 132 635**
**B1**

(12) **EUROPÄISCHE PATENTSCHRIFT**

(45) Veröffentlichungstag der Patentschrift :
21.10.87

(51) Int. Cl.⁴ : **B 65 G 57/10**, B 65 G 67/12

(21) Anmeldenummer : 84107726.6

(22) Anmeldetag : 03.07.84

(54) **Verladeeinrichtung für längliche Gegenstände.**

(30) Priorität : 20.07.83 DE 3326152
16.03.84 DE 3409780

(43) Veröffentlichungstag der Anmeldung :
13.02.85 Patentblatt 85/07

(45) Bekanntmachung des Hinweises auf die Patenterteilung : 21.10.87 Patentblatt 87/43

(84) Benannte Vertragsstaaten :
AT BE CH DE FR GB IT LI LU NL SE

(56) Entgegenhaltungen :
DE-A- 2 840 736
US-A- 2 686 603
US-A- 3 610 443
US-A- 4 201 506

(73) Patentinhaber : Truninger, Paul
Industriestrasse 9
CH-4513 Langendorf/Solothurn (CH)

(72) Erfinder : Truninger, Paul
Industriestrasse 9
CH-4513 Langendorf/Solothurn (CH)

(74) Vertreter : Haug, Dietmar et al
Patentanwälte Andrae, Flach, Haug Steinstrasse 44
D-8000 München 80 (DE)

EP 0 132 635 B1

**Beschreibung**

Die Erfindung betrifft eine selbsttätig arbeitende Einrichtung zum Verladen von länglichen Gegenständen gemäß dem Oberbegriff des Patentanspruches 1 bzw. 6.

Eine solche Verladeeinrichtung ist aus der DE-A-2 840 736 bekannt. Bei dieser Verladeeinrichtung werden die länglichen Gegenstände mit Hilfe einer ersten Transportvorrichtung, die eine nur in horizontaler Richtung bewegbare Transportfläche hat, quer zu ihrer Längserstreckung einzeln zu einer Sammelstelle gefördert, an der sie gegen feste Anschläge geschoben werden, so daß sie parallel ausgerichtet und gerafft werden. Vor den festen Anschlägen sind über die Transportebene der ersten Transportvorrichtung hochfahr- und unter diese Ebene absenkbare Anschläge vorgesehen, die wahlweise in den und aus dem Transportweg der länglichen Gegenstände bewegbar sind. Die beweglichen Anschläge werden immer dann in den Transportweg der länglichen Gegenstände hochgefahren, um die nachfolgenden Gegenstände aufzuhalten, wenn sich eine eine vorbestimmte Breite aufweisende Lage von länglichen Gegenständen an den festen Anschlägen der Sammelstelle gebildet hat. Jede Lage von länglichen Gegenständen wird dann nacheinander mittels einer zweiten Transportvorrichtung, die in Transportvorrichtung ausgerichtete Arme hat, von der Sammelstelle abgehoben und zu einer Stapelstelle überführt, an welcher die Gegenstände lagenweise in einem Behälter gestapelt werden. Die beweglichen Anschläge werden immer dann abgesenkt, um den Transportweg wieder freizugeben, wenn die an den festen Anschlägen gebildete Lage abtransportiert ist. Die Art der Lagenbildung bei der vorbekannten Verladeeinrichtung erfordert, daß die Gegenstände im Abstand zueinander zu der Sammelstelle gefördert werden, so daß die beweglichen Anschläge im Bedarfsfall zwischen zwei aufeinanderfolgende Gegenstände hochgefahren werden können, um die nachfolgenden Gegenstände aufzuhalten. Die Bildung von einzelnen Lagen vorbestimmter Breite an der Sammelstelle würde jedoch erschwert oder sogar verhindert werden, wenn die länglichen Gegenstände bereits seitlich aneinanderliegend ununterbrochen oder in Lagen mit einer die vorbestimmte Lagenbreite übersteigenden Breite auf der ersten Transportvorrichtung zu der Sammelstelle gefördert werden würden, weil dann kein Raum mehr vorhanden wäre, in den die beweglichen Anschläge eingreifen könnten.

Eine Verladeeinrichtung ist auch aus der US-A-2 686 603 bekannt. Bei dieser Verladeeinrichtung sind zwei hintereinander geschaltete Transportbänder vorgesehen, von denen das erste, näher am Bereitstellungsort angeordnete Transportband die länglichen Gegenstände nacheinander auf das zweite Transportband fördert, das sie dann weitertransportiert. Über die Transportebene des zweiten Transportbandes hochfahr- und unter diese Ebene absenkbare Anschläge sind neben dem zweiten Transportband vorgesehen. Wenn die Anschläge hochgefahren sind, werden die länglichen Gegenstände von dem zweiten Transportband gegen sie geschoben, so daß sie parallel ausgerichtet und gerafft werden. Wenn die Lage der von den Anschlägen festgehaltenen Gegenstände eine vorbestimmte Breite erreicht hat, wird das erste Band manuell abgeschaltet. Dann werden die Anschläge abgesenkt, so daß die Gegenstände in Form einer Lage vorbestimmter Breite von dem zweiten Band weiterbewegt werden können. Am Ende des zweiten Transportbandes werden die Gegenstände einzeln einer zweiten Transportvorrichtung übergeben, die in Transportrichtung weisende Arme aufweist, die etwas unterhalb der Transportebene des zweiten Bandes schneller in Transportrichtung bewegt werden als das zweite Transportband, so daß bei der Übergabe zwischen den Gegenständen der Lage Zwischenräume entstehen. Die zweite Transportvorrichtung legt dann die so gestreckte Lage auf einer im Rhythmus der Stapelung absenkbare Hubplattform ab. Die Bildung einer Lage vorbestimmter Breite erfordert bei dieser vorbekannten Verladeeinrichtung somit das manuelle Abschalten des ersten Bandes im richtigen Zeitpunkt.

Die Aufgabe der Erfindung besteht darin, die gattungsgemäße Verladeeinrichtung so auszubilden, daß sie vollkommen selbsttätig, d. h. ohne Mithilfe von Bedienungspersonal, die am Bereitstellungsort anfallenden länglichen Gegenstände oder Langgutstücke übernimmt und in dem Behältnis lagenweise stapelt, wobei die Lagenbreite des in dem Behältnis zu bildenden Stapels vollkommen unabhängig von der Breite eines der Verladeeinrichtung ggf. vorgeschalteten Rollganges ist.

Die Aufgabe der Erfindung wird einerseits durch die Merkmale des kennzeichnenden Teiles des Patentanspruches 1 und anderseits durch die Merkmale des kennzeichnenden Teiles des Patentanspruches 6 gelöst.

Eine Verladeeinrichtung gemäß Patentanspruch 6 hat besonders den Vorteil, daß die Gefahr des Übereinanderschiebens beim Ausrichten und Raffen der länglichen Gegenstände ausgeräumt ist und eine einwandfreie Lagenbildung gewährleistet wird. Die länglichen Gegenstände können sich beim Ausrichten und Raffen deshalb nicht übereinanderschieben, weil nur die auf dem ersten Transportband liegenden länglichen Gegenstände beim Ausrichten und Raffen verschoben werden, während die bereits ausgerichteten und gerafften länglichen Gegenstände auf dem zweiten Transportband liegen und nicht mehr relativ zum Band verschoben werden. Die Anzahl der zu verschiebenden länglichen Gegenstände nimmt also ständig ab, während sie bei der Verladeeinrichtung gemäß Patentanspruch 1 konstant bleibt, bis alle länglichen Gegenstände auf der ersten Transportvorrichtung ausgerichtet und seitlich aneinandergeschoben sind.

Vorzugsweise hat die Verladeeinrichtung gemäß Patentanspruch 1 eine Einrichtung zum Ausrichten und Raffen von länglichen Gegenständen derart, daß sie parallel zur Längsachse des Behältnisses verlaufen und seitlich aneinanderliegen. Die Ausricht- und Raffeinrichtung kann einen ortsfesten Anschlag zum Zusammenschieben der auf den Transportbalken liegenden länglichen Gegenständen quer zu ihrer Längserstreckung aufweisen, an welchem die Transportbalken in oder entgegen der Transportrichtung vorbeibewegbar sind, wobei der Anschlag die auf ihnen liegenden länglichen Gegenstände relativ zu den Transportbalken festhält. Hierdurch ergibt sich der Vorteil, daß die Verladeeinrichtung gemäß Patentanspruch 1 auch dann verwendet werden kann, wenn die länglichen Gegenstände nicht bereits gerafft und parallel zueinander ausgerichtet am Bereitstellungsort ankommen, sondern wenn sie dort auch schräg zueinander liegen.

Vorzugsweise hat die Ausricht- und Raffeinrichtung der Verladeeinrichtung gemäß Patentanspruch 1 einen weiteren Anschlag zwischen dem Bereitstellungsort und dem ortsfesten Auflager, welcher derart angeordnet ist, daß seine Anschlagfläche vertikal verläuft und in Transportrichtung gerichtet ist. Die Transportbalken sind dann soweit hochfahrbar, daß die auf ihnen liegenden länglichen Gegenstände in Transportrichtung über diesen weiteren Anschlag hinwegbewegbar sind. Hierdurch entsteht der Vorteil, daß die länglichen Gegenstände von beiden Seiten in Richtung quer zu ihrer Längserstreckung zusammengeschoben werden können, so daß die Wegstrecke, die das einzelne Langgutstück beim Zusammenschieben zurücklegen muß, bis alle Langgutstücke einer Lage parallel zueinander ausgerichtet sind, kürzer ist, als wenn das Zusammenschieben der Langgutstücke nur von einer Seite her mittels eines Anschlages erfolgen würde. Je weniger die Langgutstücke auf den Transportbalken aber verschoben werden müssen, desto geringer ist die Gefahr, daß die Oberfläche der Langgutstücke durch das Verschieben auf den Transportbalken beschädigt wird.

Vorzugsweise ist die Auflagefläche des ortsfesten Auflagers bei der Verladeeinrichtung gemäß Patentanspruch 1 in der Breite vergrößer- oder verkleinerbar. Hierdurch ergibt sich der Vorteil, daß die Lagenbreite des Stapels veränderbar ist und daher Behältnisse mit unterschiedlich breiten Innenräumen verwendet werden können.

Wenigstens eine die Auflagefläche des ortsfesten Auflagers in ihrer Breitenausdehnung begrenzende Kante kann abgeschrägt sein, so daß eine oberflächenschonende Abtrennung der überzähligen länglichen Gegenstände von der zu bildenden Lage erfolgt.

Sowohl bei der Verladeeinrichtung gemäß Patentanspruch 1 als auch bei der gemäß Patentanspruch 6 können die Transportarme der zweiten Transportvorrichtung derart kippbar sein, daß ihre freien Enden höher als ihre hinteren Enden anhebbar sind, und es kann an den hinteren Enden der Transportarme auf deren Oberseite ein Anschlag zum Sichern von auf den Transportarmen liegenden Langgutstücken gegen Herabfallen vorgesehen sein. Dadurch eröffnet sich die Möglichkeit, daß die erfindungsgemäße Verladeeinrichtung zum Verladen jeglicher Formen von Profilen, insbesondere auch von Rundmaterial und von Rohren, verwendet werden kann, da beim Abheben der Langgutstücke von dem Auflager oder dem zweiten Transportband die Transportarme nach hinten gekippt werden können, so daß die Langgutstücke nicht über die freien Enden der Transportarme herabrollen oder herabrutschen können. Der Anschlag an den hinteren Enden der Transportarme sorgt dafür, daß die Langgutstücke insbesondere bei nach hinten gekippter Stellung der Transportarme nicht von den Transportarmen über die hinteren Enden herabrutschen oder herabfallen können. Die Transportarme sind vorzugsweise auf ihrer Ober- und ihrer Unterseite eben und ihre Oberflächen auf der Ober- und Unterseite schließen einen spitzen Winkel an den freien Enden ein. Hierdurch ergibt sich die Möglichkeit, daß die auf den Transportarmen liegenden länglichen Gegenstände direkt, d. h. ohne zu fallen, auf dem Boden des Behältnisses oder auf der jeweils obersten Lage des Stapels abgelegt werden können, so daß Beschädigungen der Langgutstücke hierbei vermieden werden.

Weiterhin kann, wie bei der Verladeeinrichtung gemäß der US-A-2 686 603 bekannten Verladeeinrichtung, ein in dem Behältnis hochfahr- und absenkbares Auflager vorgesehen sein, auf welchem die länglichen Gegenstände von den Transportarmen lagenweise aufstapelbar sind, und das schrittweise um jeweils die Höhe einer Lage von länglichen Gegenständen in dem Behältnis absenkbar ist, wobei das Behältnis in seinem Boden dann eine Öffnung haben muß, durch die das Auflager hindurchbewegbar ist. Hierdurch kann die Ebene der Übergabe der länglichen Gegenstände von den Transportarmen auf das Auflager oder auf den Stapel immer auf derselben Höhe gehalten werden. Die erfindungsgemäße Verladeeinrichtung hat ferner den Vorteil, daß vorhandene Behältnisse, die bereits eine Öffnung in ihrem Boden haben, durch welche das Auflager hindurchbewegbar ist, wie z. B. Rohrrahmenkonstruktionen oder Stapeljoche, ohne Veränderungen verwendet werden können.

Als Alternative dazu, kann auch ein hochfahr- und absenkbares Auflager zur Aufnahme des Behältnisses vorgesehen sein, in welchem die länglichen Gegenstände von den Transportarmen lagenweise aufstapelbar sind, wobei das Auflager dann abwechselnd soweit absenkbar ist, daß die auf den Transportarmen liegenden länglichen Gegenstände über eine Seitenwand des Behältnisses hinwegbewegbar sind, und soweit anhebbar ist, daß die auf den Transportarmen liegenden länglichen Gegenstände auf dem Boden des Behältnisses oder auf der jeweils obersten Lage des in dem Behältnis gebildeten Stapels ablegbar sind, und wobei die Seitenwand des Behältnisses für jeden Transportarm eine Ausnehmung hat, in die der jeweilige Transportarm beim Hochfahren und Absenken des Auflagers eingreift. Als Behältnis können hierbei insbesondere Kisten verwendet werden, die lediglich mit den Ausnehmungen für die Transportarme versehen werden müssen, um einsatzbereit zu sein.

Vorzugsweise liegt jede Lage von länglichen Gegenständen des in dem Behältnis gebildeten Stapels auf einer dünnen, beispielsweise aus Papier oder Kunststoffolien bestehenden Zwischenlage auf, und nehmen die Transportarme jeweils eine Zwischenlage aus einem Zwischenlagenmagazin auf, bevor sie die jeweilige Lage von länglichen Gegenständen von dem ortsfesten Auflager oder dem zweiten Transportband abheben. Durch die Zwischenlagen können die länglichen Gegenstände von den Transportarmen oberflächenschonend auf den Boden des Behältnisses oder auf das bewegliche Auflager oder auf die jeweils oberste Lage des Stapels abgestreift werden, wobei ein Herabfallen der länglichen Gegenstände beim Zurückziehen der Transportarme verhindert ist.

Eine oberflächenschonende Handhabung der länglichen Gegenstände beim Transportieren derselben kann dadurch sichergestellt werden, daß die Transportbalken auf ihrer Oberseite mit einem oberflächenschonenden Gleitbelag, beispielsweise aus Kunststoff oder Graphit, versehen werden.

Durch die Verwendung eines Gleitbelags auf der die länglichen Gegenstände tragenden Fläche der ersten Transportvorrichtung lassen sich die meisten Arten von länglichen Gegenständen mittels der Anschläge problemlos seitlich aneinanderschieben. Bei manchen Arten von länglichen Gegenständen, wie z. B. solchen, die schräge Seitenkanten haben, kann es jedoch vorkommen, daß sie sich übereinanderschieben, wenn sie gegen die Anschläge bewegt werden, so daß die Bildung von Lagen von nur seitlich aneinanderliegenden länglichen Gegenständen erschwert ist. Wie bereits erwähnt, tritt jedoch die Gefahr des Übereinanderschiebens der länglichen Gegenstände bei der Verladeeinrichtung gemäß Patentanspruch 6 nicht auf.

Die Verladeeinrichtung sowohl gemäß Patentanspruch 1 als auch gemäß Patentanspruch 6 kann auch zum Verladen von länglichen Gegenständen in der umgekehrten Richtung, d. h. von einem Behältnis zu einem Aufnahmeort, eingesetzt werden.

Die erfindungsgemäße Verladeeinrichtung ist insbesondere dort anwendbar, wo das Verladen zum Zweck der innerbetrieblichen Weiterverarbeitung oder für den Versand der länglichen Gegenstände geschieht. Als längliche Gegenstände werden Werkstücke, wie z. B. Stäbe, Rohre, Stangen und Profilstäbe in Handelslängen, die aus einem beliebigen Material, wie z. B. Leichtmetall, Stahl, Buntmetall oder Kunststoff, gefertigt sind, bezeichnet. Die Bezeichnungen « längliche Gegenstände » und « Langgutstücke » werden in der Beschreibung synonym verwendet.

Zwei Ausführungsbeispiele der Erfindung sind in den Zeichnungen dargestellt und werden im folgenden näher beschrieben. Es zeigt :

Figur 1 eine schematische Seitenansicht einer Verladeeinrichtung nach einem ersten Ausführungsbeispiel der Erfindung in mehreren Stellungen bei drei verschiedenen aufeinanderfolgenden Arbeitsschritten,

Figur 2 eine ähnliche Seitenansicht der Verladeeinrichtung nach dem ersten Ausführungsbeispiel der Erfindung wie Fig. 1, wobei dieselben Stellungen der Verladeeinrichtung bei den gleichen Arbeitsschritten wie in Fig. 1 gezeigt sind, wobei jedoch der allgemeine Fall dargestellt ist, daß nach jedem Arbeitsschritt erneut längliche Gegenstände auf einem Rollgang zum Verladen bereitliegen,

Figur 3 eine ähnliche Seitenansicht der Verladeeinrichtung nach dem ersten Ausführungsbeispiel der Erfindung wie Fig. 2, in verschiedenen Stellungen bei den auf die in Fig. 2 dargestellten Arbeitsschritte folgenden beiden Arbeitsschritten der Verladeeinrichtung,

Figur 4 eine ähnliche Seitenansicht der Verladeeinrichtung nach dem ersten Ausführungsbeispiel der Erfindung wie Fig. 3, in verschiedenen Stellungen bei den auf die in Fig. 3 dargestellten Arbeitsschritte folgenden beiden Arbeitsschritten der Verladeeinrichtung,

Figur 5 eine schematische Seitenansicht der Verladeeinrichtung nach dem ersten Ausführungsbeispiel der Erfindung, die auch eine Antriebseinrichtung für die Transportbalken, Transportarme und den Zwischenlagenstapel zeigt,

Figur 6 eine schematische Draufsicht auf die in Fig. 5 gezeigte Verladeeinrichtung, allerdings ohne Behältnis, und

Figur 7 eine schematische Seitenansicht einer Verladeeinrichtung nach einem zweiten Ausführungsbeispiel der Erfindung in verschiedenen Stellungen bei vier aufeinanderfolgenden Arbeitsschritten.

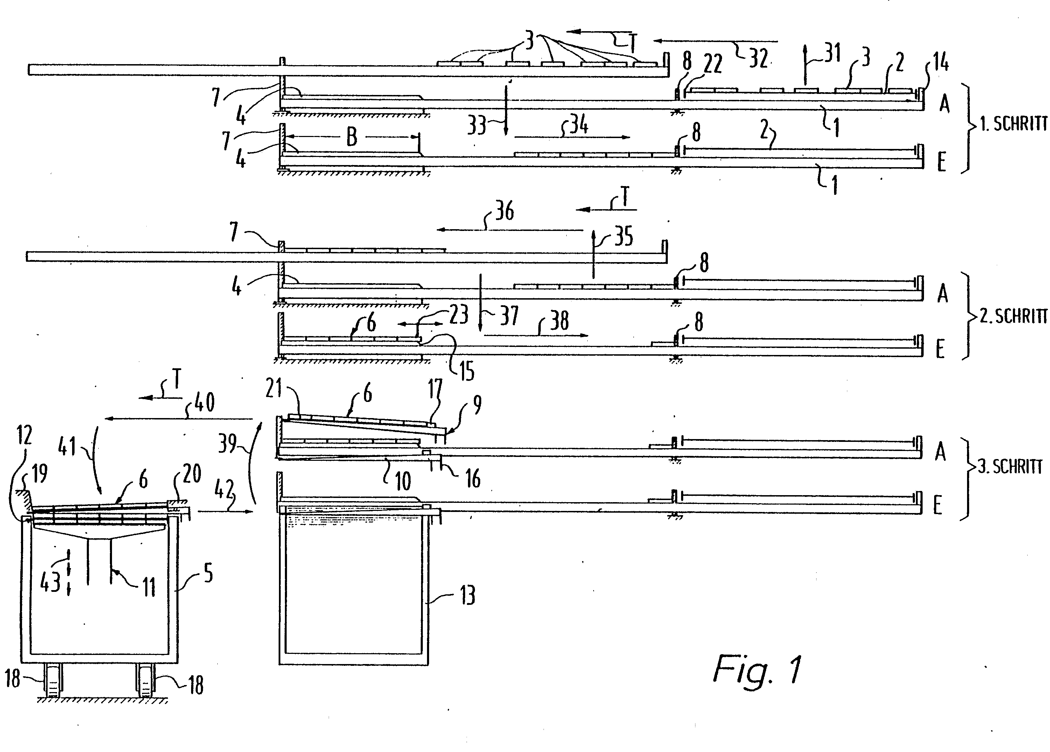

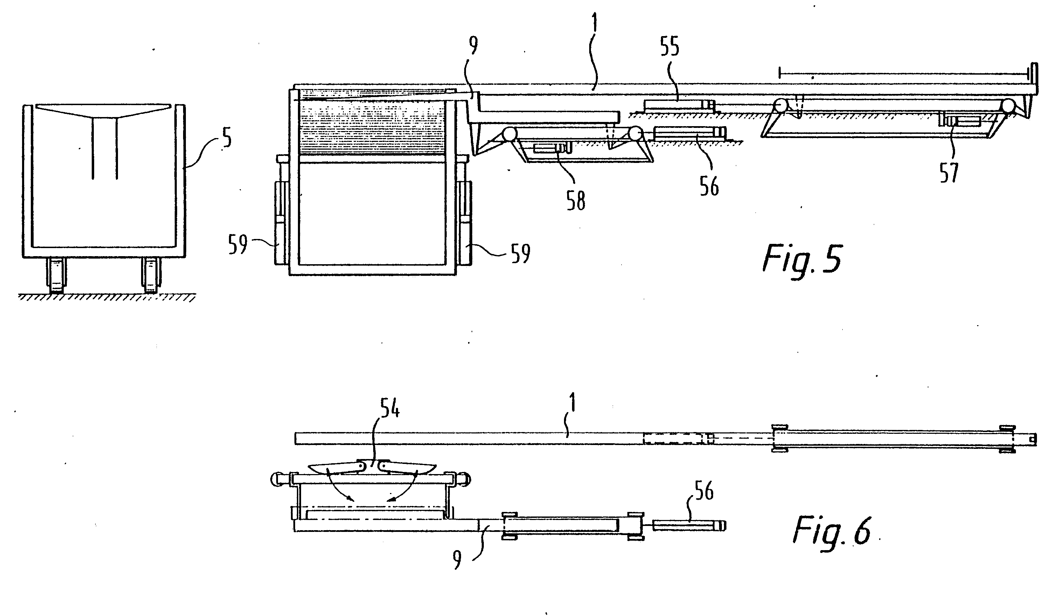

Eine Verladeeinrichtung nach einem ersten Ausführungsbeispiel der Erfindung ist in den Fig. 1 bis 6 gezeigt. Sie weist eine aus mehreren Transportbalken 1 bestehende erste Transportvorrichtung zum Transportieren von auf einem Rollgang 2 an einem Bereitstellungsort ankommenden Langgutstücken 3 in Richtung des Pfeiles T zu einer aus einem ortsfesten Auflager 4 bestehenden Lagenbildungseinrichtung auf, welches Auflager zur Einstellung der Breite von in einem Behälter 5 aufzustapelnden Lagen 6 von länglichen Gegenständen 3 dient. An dem Auflager 4 ist auf dessen vom Rollgang 2 abgekehrten Seite ein Festanschlag 7 vorgesehen. Ein weiterer Festanschlag 8 ist zwischen dem Rollgang 2 und dem ortsfesten Auflager 4 vorgesehen. Beide Festanschläge 7 und 8, die eine Ausricht- und Raffeinrichtung darstellen, dienen zum Zusammenschieben und zur parallelen Ausrichtung der länglichen Gegenstände 3, wie weiter unten näher beschrieben ist. Eine zweite Transportvorrichtung 9, die mehrere Transportarme 10 aufweist, ist für den Transport von länglichen Gegenständen von dem Auflager 4 zu dem Behälter 5 vorgesehen, wobei die Transportrichtung dieselbe ist, wie zwischen dem Rollgang 2 und dem Auflager 4. Ferner ist ein hochfahr- und absenkbares Auflager 11 vorgesehen, das zur Aufnahme des in dem Behälter 5 zu bildenden Stapels 12 dient und durch den Boden des Behälters 5 hindurch in ihn einfahr- und aus ihm wieder ausfahrbar ist. Ein Magazin 13 für Zwischenlagen 21, die zwischen den einzelnen Lagen 6 des Stapels 12 angeordnet werden, ist neben jedem Transportarm 10 der zweiten Transportvorrichtung 9 vorgesehen, wie in Fig. 6 gezeigt und weiter unten näher beschrieben ist.

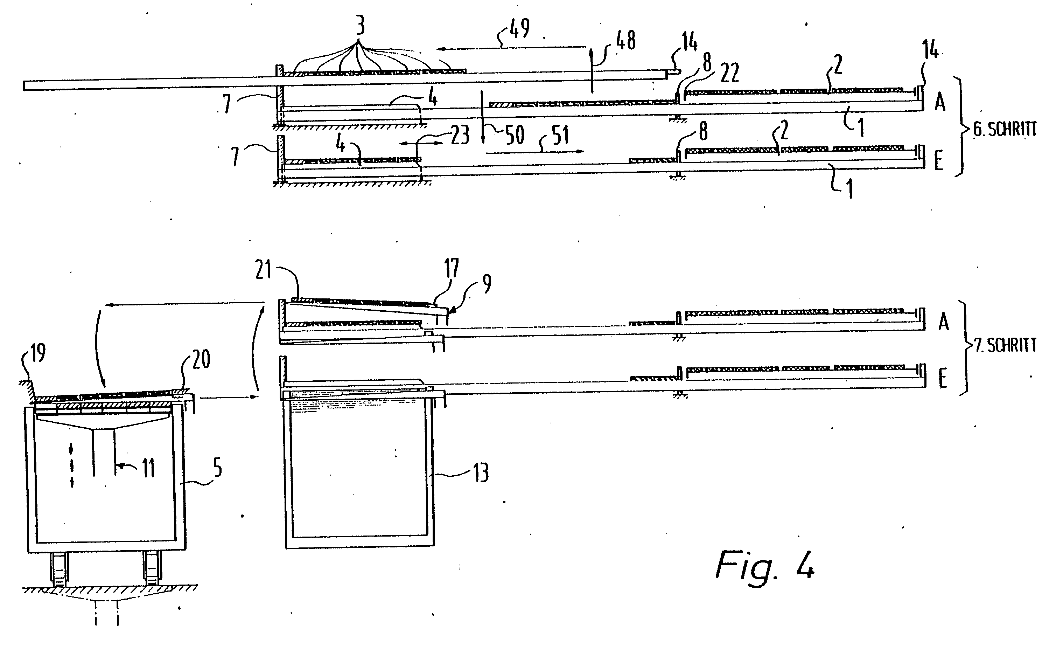

Die Transportbalken 1 sind parallel zueinander angeordnet und verlaufen waagerecht. Die Anzahl der Transportbalken und der Abstand zwischen jeweils zwei benachbarten Transportbalken sind so gewählt, daß eine übermäßige Durchbiegung der Langgutstücke beim Transport auf den Transportbalken 1 vermieden wird. Jedoch sind wenigstens zwei Transportbalken vorgesehen, wobei in den Zeichnungen nur jeweils ein Transportbalken der Verladeeinrichtung zu sehen ist. Die Transportbalken 1 sind in Transportrichtung T ausgerichtet und synchron in und entgegen der Transportrichtung T bewegbar, sowie in Vertikalrichtung hochfahrbar und absenkbar. Die zu transportierenden Langgutstücke 3 liegen auf der Oberseite der Transportbalken 1 auf und sind so orientiert, daß ihre Längsrichtung quer zur Längsrichtung der Transportbalken 1 verläuft. Der Transport der Langgutstücke 3 vom Rollgang 2 zum Auflager 4 erfolgt demnach im wesentlichen quer zur Längserstreckung der Langgutstücke 3. In der abgesenkten Stellung ist die Oberseite der Transportbalken unterhalb der Unterseite der auf dem Rollgang 2 liegenden Langgutstücke, so daß die Transportbalken in der abgesenkten Stellung unter die auf dem Rollgang 2 liegenden Langgutstücke 3 bewegbar sind. In der abgesenkten Stellung befindet sich die Oberseite der Transportbalken 1 aber auch unterhalb der waagerechten Auflagefläche des ortsfesten Auflagers 4. Die Transportbalken 1 sind so weit hochfahrbar, daß die auf ihnen liegenden Langgutstücke 3 beim Transport vom Rollgang 2 zum Auflager 4 über den Anschlag 8 hinweg bewegbar sind, der zwischen den Transportbalken 1 im Bereich zwischen dem Rollgang 2 und dem Auflager 4 angeordnet ist. Am in den Zeichnungen rechten Ende der Transportbalken 1 befindet sich ein Anschlag 14, der herunterklappbar und wieder hochklappbar ist, wie in Fig. 4 bei der Darstellung des sechsten Arbeitsschrittes ersichtlich ist. Die Transportbalken sind durch Hydraulikzylinder 55 waagrecht und durch Hydraulikzylinder 57 über ein schwenkbares Gestänge auf- und abbewegbar (Fig. 5 und 6), wobei die Bewegungen der Transportbalken 1 den Bedürfnissen entsprechend steuerbar sind.

Das ortsfeste Auflager 4 hat, wie bereits erwähnt, eine horizontale Auflagefläche und liegt zwischen den Transportbalken 1. Die Auflagefläche des Auflagers 4 überragt die Oberseite der Transportbalken 1, wenn sich letztere in der abgesenkten Stellung befinden, und liegt unterhalb der Unterseite der auf den Transportbalken 1 liegenden Langgutstücke, wenn sich die Transportbalken 1 in der hochgefahrenen Stellung befinden. Die Breite B der Auflagefläche des Auflagers 4, die dem Abstand zwischen der vertikalen Anschlagfläche des Anschlags 7, die gegen die Transportrichtung T gerichtet ist, und dem dem Rollgang 2 zugekehrten Rand der Auflagefläche des Auflagers 4 entspricht, bestimmt die Menge der Langgutstücke 3, die auf der Auflagefläche des Auflagers 4 Platz haben, wenn sie darauf so angeordnet werden, daß ihre Längsrichtung quer zur Breitenausdehnung der Auflagefläche verläuft und ihre Längsseiten aneinanderliegen. Die auf der Auflagefläche des Auflagers 4 in der beschriebenen Weise angeordneten Langgutstücke bilden gleichzeitig eine Lage 6 des im Behälter 5 zu bildenden Stapels 12 von Langgutstücken. Durch die Menge der auf der Auflagefläche des Auflagers 4 in der angegebenen Anordnung Platz findenden Langgutstücke wird daher die Breite der Lagen des Langgutstapels 12 bestimmt. Der die Auflagefläche des Auflagers 4 auf der dem Rollgang 2 zugekehrten Seite begrenzende Rand ist das obere Ende einer abgeschrägten Kante 15 des Auflagers 4. Die Kante 15 des Auflagers 4 ist in und entgegen der Transportrichtung T einschieb- bzw. ausziehbar, wie durch den Pfeil 23 in Fig. 1 bei der Darstellung des zweiten Arbeitsschrittes angedeutet ist, so daß die Auflagefläche des Auflagers 4 in ihrer Breitenausdehnung vergrößer- oder verkleinerbar ist. In Folge der Abhängigkeit der Lagenbreite des Langgutstapels 12 von der Breite B der Auflagefläche des Auflagers kann demnach durch Verschieben der Kante 15 des Auflagers 4 die Lagenbreite des Langgutstapels vergrößert bzw. verkleinert werden.

Die beiden Festanschläge 7 und 8 sind zwischen den Transportbalken 1 angeordnet, und ihre Anschlagflächen verlaufen senkrecht und sind einander zugekehrt. Über den Anschlag 8 sind die Langgutstücke 3 beim Transport vom Rollgang 2 zum Auflager 4 hinwegbewegbar, während der Anschlag 7 die Oberseite der Transportbalken auch in der hochgefahrenen Stellung der Transportbalken überragt. Werden die Langgutstücke 3 gegen die Anschlagflächen der Festanschläge 7 und 8 bewegt, halten die Festanschläge 7 und 8 die Langgutstücke relativ zu den Transportbalken fest, wobei die Langgutstücke quer zu ihrer Längserstreckung zusammengeschoben und parallel ausgerichtet werden. Die Oberseite der Transportbalken 1 ist mit einem geeigneten Belag, wie z. B. Kunststoff oder Graphit, versehen, um zu vermeiden, daß die Oberfläche der auf ihnen beim Zusammenschieben gleitenden Langgutstücke beschädigt wird. Das Zusammenwirken der Transportbalken 1 und der Festanschläge 7 und 8 zum Zusammenschieben der Langgutstücke ist weiter unter näher beschrieben.

Die zweite Transportvorrichtung 9 weist zwei oder mehr als zwei in Transportrichtung T ausgerichtete Transportarme 10 auf, wobei die Anzahl und der gegenseitige Abstand der Transportarme ebenfalls wie die Anzahl und der gegenseitige Abstand der Transportbalken 1 in Abhängigkeit von der Durchbiegung der zu transportierenden Langgutstücke 3 gewählt ist. Die Transportarme 10 sind an ihrem hinteren Ende, das dem Rollgang 2 zugekehrt ist, mit Trägern 16 verbunden, wie in den Zeichnungen dargestellt ist. Die Träger 16 und die Transportarme 10 der Transportvorrichtung 9 sind zusammen in und entgegen der Transportrichtung T bewegbar, sowie in Vertikalrichtung hochfahr- und absenkbar. Zusätzlich sind die Träger 16 und die Arme 10 der Transportvorrichtung 9 zusammen derart kippbar, daß die freien Enden der Transportarme 10 höher als ihre hinteren Enden anhebbar sind, wie aus den Zeichnungen ersichtlich ist. Am hinteren Ende der Transportarme 10 ist auf der Oberseite ein Anschlag 17 befestigt, an welchem sich die auf den Transportarmen 10 liegenden Langgutstücke 3 abstützen können, wenn die Transportarme 10 nach hinten gekippt sind. Der Anschlag 17 verhindert demnach, daß die auf den Transportarmen liegenden Langgutstücke über die hinteren Enden der Transportarme herabrollen oder herabrutschen, wenn die Transportarme nach hinten gekippt sind. Die Oberflächen der Transportarme 10 sind an ihrer Oberseite und an ihrer Unterseite eben und schließen einen spitzen Winkel an den freien Ende der Transportarme 10 ein. In der nicht nach hinten gekippten Stellung der Transportarme 10 verläuft die Unterseite der Transportarme 10 horizontal, während die Oberseite der Transportarme in Richtung auf die freien Enden zu nach unten geneigt sind. Das durch die spitz zulaufende Form der Transportarme in der nicht gekippten Stellung sich ausbildende Gefälle auf der Oberseite der Transportarme erleichtert das Abschieben der auf den Transportarmen liegenden Langgutstücke über die freien Enden der Transportarme hinweg auf die Oberseite des hochfahr- und absenkbaren Auflagers 11 oder auf die jeweils oberste Lage des Langgutstapels 12.

Der Behälter 5 ist im Querschnitt U-förmig, wobei seine Be- und Entladeöffnung oben angeordnet ist. Im Boden hat er eine nicht näher dargestellte Öffnung, durch die das Auflager 11 in den Behälter einfahr- und aus ihm wieder ausfahrbar ist. Auf der Unterseite des Bodens des Behälters 5 sind Transportrollen 18 montiert.

Oberhalb des Behälters 5 ist auf jeder Seite jeweils ein Festanschlag 19 bzw. 20 vorgesehen. Der Festanschlag 19 ist so angeordnet, daß sich auf den Transportarmen 10 liegende Langgutstücke daran abstützen können, wenn sich die Transportarme 10 beim Beladen des Behälters in der nicht gekippten Stellung befinden, in welcher die Oberseite der Transportarme nach vorne geneigt ist. Der Festanschlag 20 ist so angeordnet, daß beim Zurückziehen der Transportarme 10 die daraufliegenden Langgutstücke daran anstoßen, und dadurch über die freien Enden der Transportarme hinweg abgestreift werden.

Das hochfahr- und absenkbare Auflager 11 besteht aus mehreren T-förmigen Trägern, deren Anzahl und gegenseitiger Abstand so gewählt sind, daß die Durchbiegung der Langgutstücke möglichst gering ist. Das Auflager 11 ist in den Fußboden versenkbar, so daß die Oberkante der T-förmigen Träger des Auflagers 11 in der Ebene des Fußbodens liegt. Die versenkte Stellung des Auflagers 11 ist in den Zeichnungen strichpunktiert dargestellt. Ferner ist das Auflager 11 aus der vollständig hochgefahrenen Stellung schrittweise um die Höhe einer Lage des Langgutstapels 12 absenkbar, so daß die jeweils oberste Lage des Langgutstapels 12, auf welche die auf den Transportarmen 10 der Transportgabel 9 liegenden Langgutstücke abgestreift werden, während des Beladevorganges auf derselben Höhe angeordnet ist. Die T-förmigen Träger des Auflagers 11 sind in den Zeichnungen gebrochen dargestellt. Der Antrieb des Auflagers 11 wird durch eine nicht näher dargestellte Antriebsvorrichtung herkömmlicher Bauart bewerkstelligt.

Das Zwischenlagenmagazin 13 ist im Querschnitt ebenfalls U-förmig und ist in der Nähe des festen Auflagers 4 vorgesehen. In dem Zwischenlagenmagazin 13 sind die Zwischenlagen 21 gestapelt, die mittels Hubzylinder 59 hochfahrbar sind, wobei jeweils die oberste auf jedem Arm 10 der Transportvorrichtung 9 mittels Schwenkarmen 54 (Fig. 6) geschoben wird, bevor sie die Langgutstücke von dem Auflager 4 abhebt.

Der Antrieb der Transportvorrichtung 9 erfolgt in horizontaler Richtung durch einen Hydraulikzylinder 56 und in vertikaler Richtung durch einen Hydraulikzylinder 58 über ein schwenkbares Gestänge, wie aus Fig. 5 und 6 zu sehen ist.

Sämtliche Bewegungen einschließlich der Hub- und Absenkbewegungen der Transportbalken 1, der Transportvorrichtung 9 und des Auflagers 11 sind nach einem vorbestimmten Ablaufprogramm steuerbar, so daß die Langgutstücke von dem Rollgang 2 bis zum Behälter 5 ohne manuellen Eingriff beschädigungsfrei handhabbar sind.

Die Arbeitsweise der erfindungsgemäßen Verladeeinrichtung ist wie folgt.

In Fig. 1 ist der Fall dargestellt, daß eine Anzahl von auf dem Rollgang 2 liegenden Langgutstücken 3 in drei aufeinander folgenden Arbeitsschritten in den Behälter 5 transportiert werden. Es wird dabei angenommen, daß die Langgutstücke 3 auf dem Rollgang 2 in einer Ebene, innerhalb der durch die Breite des Rollgangs 2 vorgegebenen Grenzen in beliebiger Anzahl und schräg liegen. Zu Beginn des ersten Arbeitsschrittes befinden sich die Transportbalken 1 in der abgesenkten Stellung und sind nach rechts verschoben, so daß sie mit ihrem rechten Ende unter die auf dem Rollgang 2 liegenden Langgutstücke 3 ragen. Die Verladeeinrichtung befindet sich hierbei in der Anfangsstellung A beim ersten Arbeitsschritt, der in Fig. 1 dargestellten Arbeitsweise. Die Transportbalken 1 übernehmen sodann durch einen Vertikalhub in Richtung des Pfeiles 31 die auf dem Rollgang 2 liegenden Langgutstücke und fördern sie durch eine Horizontalbewegung in Richtung des Pfeiles 32 oder in Transportrichtung T über eine seitliche Führung 22 des

Rollgangs 2 und den Festanschlag 8 hinweg in eine Lage, in welcher sich die Langgutstücke 3 links über dem Festanschlag 8 befinden. Dann werden die Transportbalken 1 in Richtung des Pfeiles 33 abgesenkt und nach rechts in Richtung des Pfeiles 34 oder entgegen der Transportrichtung T bewegt, wobei die Langgutstücke 3 von dem Festanschlag 8 festgehalten und dadurch in Richtung quer zu ihrer Längserstreckung zusammengeschoben werden. Die Langgutstücke 3 sind nunmehr parallel zueinander ausgerichtet und es sind keine Zwischenräume mehr zwischen ihnen vorhanden. Beim Zusammenschieben gleiten die Langgutstücke 3 auf der Oberfläche der Transportbalken 1, wobei der Gleitbelag auf den Transportbalken 1 eine Beschädigung der Oberfläche der Langgutstücke 3 verhindert. Die Verladeeinrichtung befindet sich nun in der Endstellung E beim ersten Arbeitsschritt.

Die Anfangsstellung A der Verladeeinrichtung beim zweiten Arbeitsschritt entspricht der Endstellung der Verladeeinrichtung beim ersten Arbeitsschritt. Ausgehend von dieser Stellung werden die Transportbalken 1 in Richtung des Pfeiles 35 vertikal angehoben und sodann in Richtung des Pfeiles 36 bzw. in Transportrichtung T horizontal nach links bewegt. Am Ende dieser Horizontalbewegung befinden sich die Langgutstücke 3 am Festanschlag 7 und über dem ortsfesten Auflager 4. Nunmehr werden die Transportbalken 1 in Richtung des Pfeiles 37 abgesenkt, wobei ein Teil der auf ihnen liegenden Langgutstücke 3 auf der horizontalen Auflagefläche des ortsfesten Auflagers 4 zu liegen kommen. Die Anzahl der auf der Auflagefläche des ortsfesten Auflagers 4 liegenden Langgutstücke 3 wird durch die Breite B der Auflagefläche des Auflagers 4 bestimmt. Diese Langgutstücke bilden eine Lage 6 des im nachfolgenden dritten Arbeitsschritt in dem Behälter 5 zu bildenden Stapels von Langgutstücken. Diejenigen Langgutstücke, die keinen Platz auf der Auflagefläche des Auflagers 4 haben, werden mit den Transportbalken 1 weiter abgesenkt, wobei dasjenige Langgutstück, das über dem dem Rollgang 2 zugekehrten Rand der Auflagefläche 4 abgesenkt wird und dessen Schwerpunkt rechts von diesem Rand liegt, an der Kante 15 abrutscht und auf dem Transportbalken 1 verbleibt. Die Breite B der Auflagefläche des Auflagers 4 ist so einstellbar, daß die auf ihr gebildete Lage 6 von Langgutstücken 3 so breit ist, daß sie gerade noch in den Behälter 5 paßt und daß die Trennlinie zwischen der auf dem Auflager 4 gebildeten Lage 6 von Langgutstücken 3 und denjenigen Langgutstücken 3, die keinen Platz mehr auf der Auflagefläche des Auflagers 4 haben, mit der schrägen Kante 15 des Auflagers 4 zusammenfällt. Nachdem die Transportbalken 1 in Richtung des Pfeiles 37 abgesenkt worden sind, werden sie horizontal in Richtung des Pfeiles 38 oder entgegen der Transportrichtung T nach rechts bewegt, wobei die auf ihnen liegenden Langgutstücke, welche auf der Auflagefläche des Auflagers 4 nicht mehr Platz haben, an dem Festanschlag 8 zu liegen kommen. Im dargestellten Beispiel ist nur ein einzelnes Langgutstück zum Festanschlag 8 zurücktransportiert worden. Die Verladeeinrichtung befindet sich nun in der Endstellung E beim zweiten Arbeitsschritt. Wenn am Ende des zweiten Arbeitsschrittes die Lage 6 von auf dem Auflager 4 liegenden Langgutstücken noch nicht voll wäre und weitere Langgutstücke auf dem Rollgang 2 zum Abtransport bereitlägen, würde der zweite Arbeitsschritt so oft wiederholt werden, bis die Lage auf dem Auflager 4 voll wäre. In der Endstellung E der Verladeeinrichtung beim zweiten Schritt befinden sich die Transportbalken 1 in derselben Lage, wie in der Endstellung E der Verladeeinrichtung beim ersten Arbeitsschritt.

Die Hübe der Transportbalken 1 in Aufwärtsrichtung sowie in Abwärtsrichtung und die Länge der Horizontalbewegungen in und entgegen der Transportrichtung T sind jeweils bei beiden Arbeitsschritten gleich groß.

Während des dritten Arbeitsschrittes sind die Transportbalken 1 in Ruhe. Die Transportarme 10 heben nun durch eine Aufwärtsbewegung in Richtung des Pfeiles 39 die Lage 6 von Langgutstücken 3 von der Auflagefläche des Auflagers 4 ab. Hierbei werden die Arme 10 der Transportvorrichtung 9 nach hinten gekippt, so daß die freien Enden der Arme 10 höher als die hinteren Enden der Arme 10 angehoben werden. Die Schrägstellung der Transportarme 10 bewirkt, daß Langgutstücke nicht über die freien Enden der Transportarme 10 herabrutschen oder herabrollen können, wenn die Langgutstücke aus Rundmaterial sind. Bevor die Transportarme 10 die Lage 6 von Langgutstücken 3 von dem Auflager 4 abheben, sind Zwischenlagen 21 aus dem Zwischenlagenmagazin 13 auf die Transportarme geschoben worden, so daß die Langgutstücke der Lage 6 auf den Zwischenlagen 21 liegen. Die Langgutstücke 3 der Lage 6 werden nun durch eine Horizontalbewegung der Transportvorrichtung 9 in Richtung des Pfeiles 40 bzw. in Transportrichtung T über den Behälter 5 gefördert und dann in Richtung des Pfeiles 41 abgesenkt, wobei die Transportarme 10 nach vorne gekippt werden, so daß die Unterseite der Transportarme horizontal verläuft und die Oberseite der Transportarme, zusammen mit den Zwischenlagen 21 und der Lage 6 nach vorne geneigt sind. In dieser Stellung liegen die Transportarme 10 der Transportvorrichtung 9 mit ihrer Unterseite auf der Oberfläche der obersten Lage des in dem Behälter 5 gebildeten Langgutstapels auf, oder sie befinden sich in nächster Nähe dieser Lage, ohne sie jedoch zu berühren. Die auf den Armen 10 der Transportvorrichtung 9 liegenden Langgutstücke stützen sich in dieser Stellung am Anschlag 19 ab, so daß sie trotz der Neigung der Oberseite der Arme 10 der Transportvorrichtung 9 nicht von den Transportarmen 10 herabrutschen bzw. herabrollen. Nun wird die Transportvorrichtung 9 durch eine Horizontalbewegung in Richtung des Pfeiles 42 oder entgegen der Transportrichtung T zurückgezogen, wobei der Anschlag 20 die Lage 6 von Langgutstücken 3 samt den Zwischenlagen 21 festhält und sich die Lage 6 von Langgutstücken 3 samt den Zwischenlagen 21 auf die oberste Lage des Langgutstapels 12 legt. Durch die Zwischenlagen 21 wird bewirkt, daß sich die Lage 6 oder jede weitere Lage von Langgutstücken als zusammenhängendes Ganzes auf die jeweils oberste Lage des Langgutstapels 12 legt. Außerdem kann die Oberfläche der Langgutstücke beim Zurückziehen der Transportarme 10 nicht beschädigt werden, da keine Relativbewegung zwischen den Langgutstücken und den Zwischenlagen 21 beim Zurückziehen der Transportarme 10 stattfindet.

Nachdem die Lage 6 von Langgutstücken 3 auf dem Langgutstapel 12 abgelegt worden ist, wird das Auflager 11 um die Höhe der Lage 6 abgesenkt, so daß sich die Oberfläche der Lage 6 auf derselben Höhe befindet, in welcher sich zuvor die Oberfläche der nunmehr vorletzten Lage des Langgutstapels 12 befunden hat. Da das Auflager 11 nach jedem Ablegen einer Lage von Langgutstücken auf dem Langgutstapel 12 um die Höhe der zuletzt gebildeten Lage abgesenkt wird, ergibt sich insgesamt eine schrittweise Absenkbewegung des Auflagers 11, die durch die aneinandergereihten Pfeile 43 angedeutet ist. Wenn der Langgutstapel 12 eine zur Füllung des Behälters 5 ausreichende Zahl von Langgutlagen aufweist, wird das Auflager 11 durch die Öffnungen im Boden des Behälters 5 hindurch abgesenkt, wobei die untere Lage des Langgutstapels 12 auf dem Boden des Behälters 5 zu liegen kommt. In seiner unteren Stellung ist das Auflager 11 im Fußboden versenkt, so daß seine Oberfläche in der Ebene des Fußbodens liegt. Diese Stellung des Auflagers 11 ist in den Zeichnungen strichpunktiert angedeutet. Danach kann der Behälter 5 wegtransportiert und gegen einen leeren Behälter ausgewechselt werden. Der Behälter 5 wird entweder weggerollt oder mittels Kran weggehoben.

Am Ende des dritten Arbeitsschrittes befindet sich die Verladeeinrichtung in der Stellung E und der Arbeitsablauf kann von neuem beginnen.

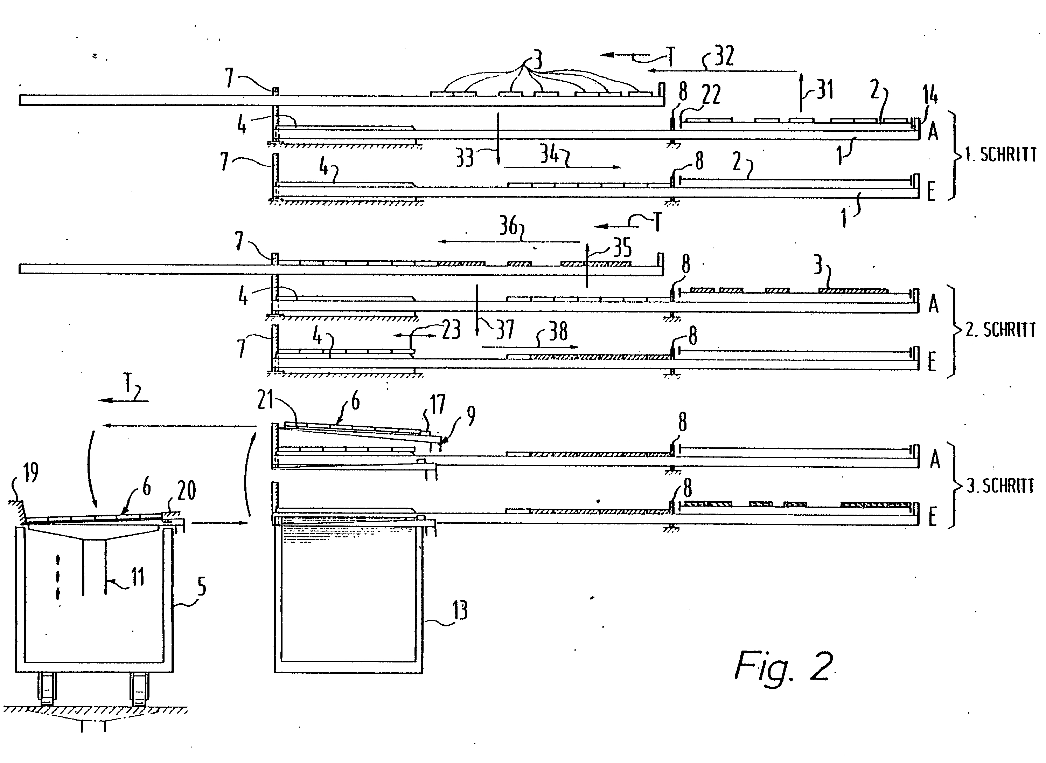

In Fig. 2 ist im wesentlichen derselbe Arbeitsablauf wie in Fig. 1 dargestellt, wobei jedoch der allgemeine Fall angenommen wird, daß vor dem zweiten Arbeitsschritt und während des dritten Arbeitsschrittes neue Langgutstücke auf dem Rollgang anfallen. Zur Verdeutlichung des in Fig. 2 dargestellten Arbeitsablaufes der Verladeeinrichtung sind die vor dem zweiten Arbeitsschritt und während des dritten Arbeitsschrittes auf dem Rollgang 2 anfallenden Langgutstücke unterschiedlich schraffiert, während die zu Beginn des ersten Arbeitsschrittes auf dem Rollgang 2 bereitliegenden Langgutstücke nicht schraffiert sind. Der erste Arbeitsschritt des Arbeitsablaufes gemäß Fig. 2 ist identisch mit dem ersten Arbeitsschritt des Arbeitsablaufes gemäß Fig. 1 und bedarf somit keiner weiteren Erläuterung. Beim zweiten Arbeitsschritt des Arbeitsablaufes gemäß Fig. 2 werden im Unterschied zum zweiten Arbeitsschritt des Arbeitsablaufes gemäß Fig. 1 beim Hochfahren der Transportbalken 1 in Richtung des Pfeiles 35 weitere Langgutstücke 3 vom Rollgang 2 abgehoben. Die Abtrennung der Langgutstücke von denjenigen, die auf dem Auflager 4 Platz haben, erfolgt wie beim Arbeitsablauf gemäß Fig. 1. Bei der anschließenden Horizontalbewegung der Transportbalken 1 in Richtung des Pfeiles 38 oder entgegen der Transportrichtung T werden die weiteren vor dem zweiten Arbeitsschritt auf dem Rollgang angefallenen Langgutstücke zusammen mit den restlichen Langgutstücken, die bereits zu Beginn des ersten Arbeitsschrittes auf dem Rollgang 2 bereitlagen und keinen Platz auf dem Auflager 4 haben, zusammengeschoben, so daß sie parallel ausgerichtet und keine Zwischenräume zwischen ihnen mehr vorhanden sind.

Während des dritten Schrittes des Arbeitsablaufes gemäß Fig. 2 bleiben die durch den Anschlag 8 zusammengeschobenen Langgutstücke auf dem Transportbalken 1 liegen, während neue Langgutstücke auf dem Rollgang 2 anfallen und der Transport der auf dem Auflager 4 liegenden Langgutstücke in den Behälter 5 genau so abläuft, wie beim dritten Arbeitsschritt des Arbeitsablaufes gemäß Fig. 1.

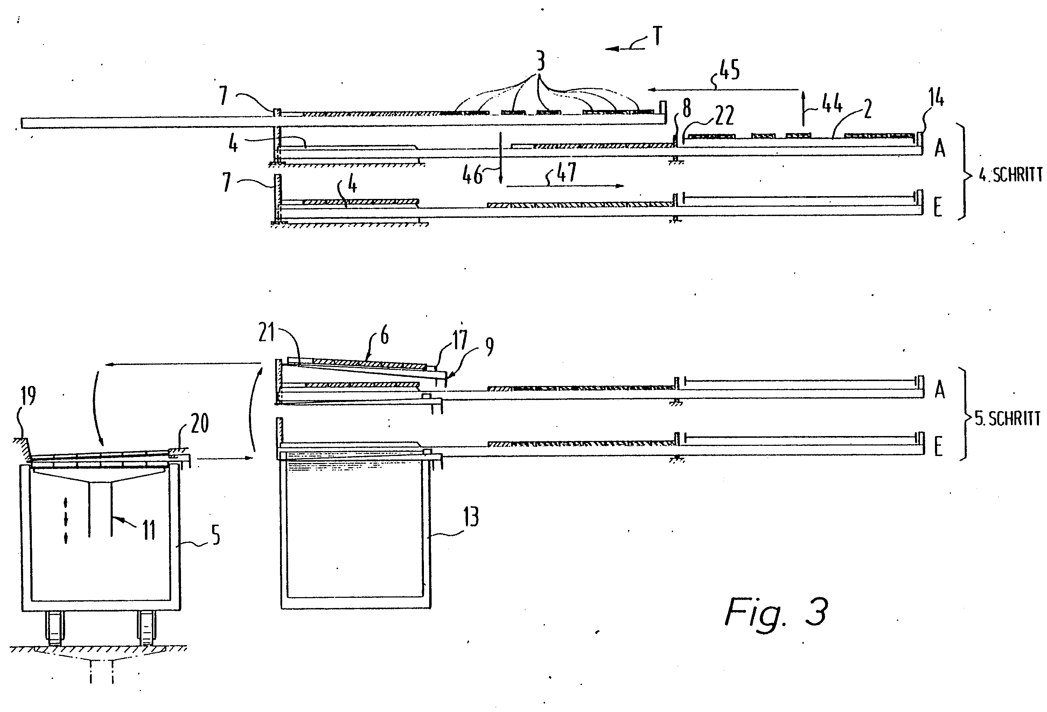

In Fig. 3 ist die Fortsetzung des in Fig. 2 dargestellten Arbeitsablaufes dargestellt. Zu Beginn des vierten Arbeitsschrittes, wobei sich die Verladeeinrichtung in der Anfangsstellung A befindet, die der Endstellung E beim dritten Arbeitsschritt des Arbeitsablaufes gemäß Fig. 2 entspricht, werden die Transportbalken 1 in Richtung des Pfeiles 44 angehoben, wobei die während des dritten Schrittes des Arbeitsablaufes gemäß Fig. 2 auf den Rollgang 2 angefallenen Langgutstücke vom Rollgang 2 abgehoben und zusammen mit den am Anschlag 8 zusammengeschobenen Langgutstücken nach oben bewegt werden. Dann folgt die Horizontalbewegung der Transportbalken in Richtung des Pfeiles 45 bzw. in Transportrichtung T, wobei die zuletzt auf dem Rollgang 2 angefallenen Langgutstücke über die Seitenführung 22 des Rollgangs 2 und den Anschlag 8 hinweg bewegt werden. Danach werden die Transportbalken 1 in Richtung des Pfeiles 46 wieder abgesenkt, wobei eine der Breite der Auflagefläche des Auflagers 4 entsprechende Menge von Langgutstücken auf der Auflagefläche des Auflagers 4 abgelegt werden, während die übrigen Langgutstücke auf den Transportbalken 1 verbleiben. Im dargestellten Beispiel setzt sich die Lage von auf dem Auflager 4 liegenden Langgutstücken aus einem Langgutstück, das bereits zu Beginn des ersten Arbeitsschrittes des Arbeitsablaufes gemäß Fig. 2 auf dem Rollgang 2 lag, und einem Teil der vor dem zweiten Arbeitsschritt des Arbeitsablaufes gemäß Fig. 2 auf dem Rollgang 2 angefallenen Langgutstücke zusammen. Diejenigen Langgutstücke, die keinen Platz auf dem Auflager 4 haben, werden durch eine Horizontalbewegung der Transportbalken 1 in Richtung des Pfeiles 47 oder entgegen der Transportrichtung T nach rechts bewegt, wobei sie von dem Anschlag 8 festgehalten und dadurch zusammengeschoben werden. Im fünften Arbeitsschritt des Arbeitsablaufes gemäß Fig. 3 werden die auf dem Auflager 4 liegenden Langgutstücke, genauso wie beim dritten Schritt des Arbeitsablaufes gemäß Fig. 2 und wie beim dritten Schritt des Arbeitsablaufes gemäß Fig. 1, durch die Transportarme 10 von dem Auflager 4 abgehoben und in den Behälter 5 transportiert, wo sie durch das Auflager 11 abgesenkt werden. Die Transportbalken 1 bleiben während dieses Vorgangs in Ruhe. Am Ende des fünften Arbeitsschrittes des Arbeitsablaufes gemäß Fig. 3 befindet sich die Verladeeinrichtung in der Endstellung E.

In Fig. 4 ist die Fortsetzung des in Fig. 3 dargestellten Arbeitsablaufes dargestellt, wobei jedoch der Fall angenommen wird, daß nicht alle zu Beginn des sechsten Arbeitschrittes auf dem Rollgang liegenden Langgutstücke auf den Transportbalken 1 Platz hätten, nachdem die auf ihnen liegenden Langgutstücke 3 am Anschlag 7, wie dargestellt, verschoben worden sind. Es wird daher nicht der volle Vertikalhub in Richtung des Pfeiles 48 wie beim vierten Schritt des Arbeitsablaufes gemäß Fig. 3 ausgeführt, sondern die Transportbalken 1 werden nur so weit angehoben, daß bei der nachfolgenden Horizontalbewegung in Richtung des Pfeiles 49 oder in Transportrichtung T die auf den Transportbalken 1 liegenden Langgutstücke über das Auflager 4 bewegt werden und andererseits die auf dem Rollgang 2 liegenden Langgutstücke nicht abgehoben werden. Der Anschlag 14 ist hierbei heruntergeklappt, so daß keine Berührung des Anschlags 14 mit den auf dem Rollgang 2 liegenden Langgutstücken 3 stattfindet. An die Horizontalbewegung in Richtung des Pfeiles 49 schließt sich die Absenkbewegung der Transportbalken 1 in Richtung des Pfeiles 50 an, wobei, wie bereits zuvor beschrieben, diejenigen Langgutstücke, die keinen Platz auf der Auflagefläche des Auflagers 4 haben, von denjenigen, die auf der Auflagefläche des Auflagers 4 aufliegen, abgetrennt werden. Dann folgt die Horizontalbewegung in Richtung des Pfeiles 51, wobei diejenigen Langgutstücke, die keinen Platz mehr auf dem Auflager 4 haben, zum Anschlag 8 zurücktransportiert werden.

Im siebten Arbeitsschritt des Arbeitsablaufes gemäß Fig. 4 werden die auf dem Auflager 4 liegenden Langgutstücke von den Transportarmen 10 wieder abgehoben und in den Behälter 5 transportiert.

Durch die Maßnahmen des sechsten und siebten Schrittes des Arbeitsablaufes gemäß Fig. 4 ist auf den Transportbalken 1 genügend Platz geschaffen worden, um im nicht dargestellten achten Schritt die auf dem Rollgang 2 liegenden Langgutstücke nunmehr aufzunehmen und ebenfalls in den Behälter zu transportieren. Die Anfangs- und Endstellungen der Verladeeinrichtung sind in den Darstellungen des sechsten und siebten Schrittes des Arbeitsablaufes gemäß Fig. 4 ebenfalls wieder mit den Buchstaben A und E bezeichnet.

Anstelle des in den Figuren gezeigten Behälters zur Aufnahme des Langgutstapels könnten auch zwei oder mehr als zwei Stapeljoche verwendet werden. Es könnte alternativ auch ein Behälter mit geschlossenem Boden, aber im Bereich der Transportarme 10 offenen Seitenwand verwendet werden. Ein solcher Behälter könnte dann direkt auf das Auflager 11 gelegt werden. Zum Beladen des Behälters müßte dann bei jeder Lage ein Vertikalhub mit dem Auflager 11 gemacht werden, um die Langgutstücke über die Seitenwand des Behälters zu transportieren. Als Beispiel für einen solchen Behälter seien Kisten genannt.

Ggf. kann das Paketieren von genügend stabilen Langgutstücken auch ohne seitliche Führungen erfolgen.

Anstelle von plattenförmigen Zwischenlagen können auch Papierbahnen oder Kunststoff-Folien zur Lagentrennung über die ganze Länge der Langgutstücke verwendet werden. Ggf. kann auch vollständig auf Zwischenlagen oder sonstige Vorrichtungen zur Lagentrennung verzichtet werden.

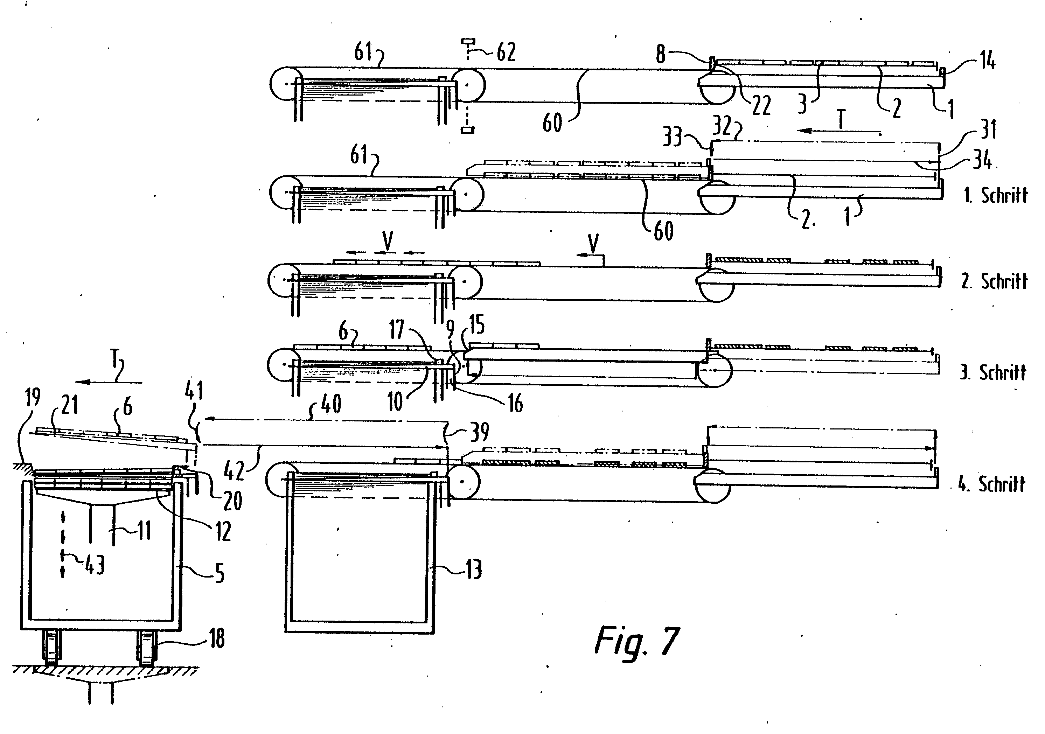

In Fig. 7 ist eine Verladeeinrichtung nach einem zweiten Ausführungsbeispiel der Erfindung gezeigt, wobei für gleiche Teile dieselben Bezugsziffern verwendet worden sind.

Die Verladeeinrichtung nach Fig. 7 weist eine erste Transportvorrichtung auf, die mehrere Transportbalken 1 hat, mit denen auf einem Rollgang 2 an einem Bereitstellungsort ankommende längliche Gegenstände 3 in Richtung des Pfeiles T zu einer Ausricht- und Raffeinrichtung transportiert werden, die zwei hintereinander geschaltete Transportbänder 60, 61 aufweist. Die Transportbalken 1 sind im wesentlichen wie die Transportbalken der Verladeeinrichtung nach dem ersten Ausführungsbeispiel ausgebildet und antreibbar. Im Unterschied zu den Transportbalken der Verladeeinrichtung nach dem ersten Ausführungsbeispiel sind die Transportbalken 1 der vorliegenden Verladeeinrichtung auf Rollgangbreite gekürzt und weisen an ihren dem Rollgang 2 abgekehrten Enden Schrägflächen 15 auf, deren Funktion weiter unter näher erläutert wird. Die beiden Transportbänder 60 und 61 sind so angeordnet, daß sich in der Seitenansicht, wie in der Zeichnung gezeigt, eine zusammenhängende horizontale Auflagefläche für die länglichen Gegenstände 3 ergibt. Die erste Transportvorrichtung transportiert die länglichen Gegenstände 3 zu dem ersten Transportband 60, das näher am Rollgang 2 liegt. Das Transportband 60 fördert die länglichen Gegenstände 3 auf das Transportband 61, wobei sie gleichzeitig ausgerichtet und gerafft werden, wie weiter unter näher beschrieben ist. Eine zweite Transportvorrichtung 9, 10 dient zum Transportieren der auf dem zweiten Transportband 61 liegenden länglichen Gegenstände von dem zweiten Transportband 61 zu einem Behältnis 5, in welches die länglichen Gegenstände 3 lagenweise eingebracht und gestapelt werden. Die zweite Transportvorrichtung ist genauso wie die entsprechende Transportvorrichtung der Verladeeinrichtung nach nach dem ersten Ausführungsbeispiel ausgebildet und betreibbar, so daß sie keiner näheren Erläuterung bedarf. Auch das Behältnis 5 ist wie bei der Verladeeinrichtung nach dem ersten Ausführungsbeispiel ausgebildet und wird daher nicht näher beschrieben.

Die Transportbänder 60, 61 sind intermittierend und mit gleicher Geschwindigkeit bewegbar, wobei sich ihr oberes Trum in Transportrichtung T bewegt. Eine nicht näher dargestellte Steuereinrichtung steuert den Betrieb des zweiten Transportbandes 61 in der Weise, daß die länglichen Gegenstände 3 beim Übergang vom ersten Band 60 auf das zweite Band 61 senkrecht zur Transportrichtung T oder parallel zur Längsachse des Behältnisses 5 ausgerichtet und seitlich aneinandergeschoben werden, wie weiter unter näher erläutert ist. Die Steuereinrichtung weist zwei oder mehrere über die Länge der Gegenstände 3 verteilte Lichtschranken 62 auf, deren optische Achsen in einer vertikalen Ebene liegen, in der auch die gemeinsame Achse der Umlenkrollen der beiden Bänder 60, 61 liegt, wobei die Lichtquellen und die entsprechenden Fotodetektoren jeweils über und unter der Auflagefläche der Bänder 60, 61 angeordnet sind. Der Übersichtlichkeit halber sind die Lichtschranken 62 nur in der obersten Darstellung der Verladeeinrichtung angedeutet.

Das zweite Transportband 61 wird einer Lagenbildungseinrichtung zugeordnet, für die ebenfalls eine nicht näher dargestellte Steuereinrichtung vorgesehen ist, die den Betrieb der beiden Bänder 60, 61 und der Transportbalken 1 zur Lagenbildung steuert.

Die Arbeitsweise der erfindungsgemäßen Verladeeinrichtung nach dem zweiten Ausführungsbeispiel ist wie folgt.

Im ersten Arbeitsschritt werden die Transportbalken 1 in Richtung des Pfeiles 31 angehoben, wobei sie die auf dem Rollgang 2 liegenden länglichen Gegenstände 3 von diesem abheben. Dann werden die Transportbalken 1 mit den auf ihnen liegenden länglichen Gegenständen 3 in Richtung des Pfeiles 32 oder in Transportrichtung T über das erste Band 60 bewegt und danach in Richtung des Pfeiles 33 unter das Niveau der Oberfläche des Bandes 60 abgesenkt, wobei die länglichen Gegenstände 3 auf das Band 60 gelegt werden.

Im zweiten Arbeitsschritt wird das erste Transportband 60 eingeschaltet, um die auf ihm liegenden länglichen Gegenstände vom ersten Band 60 auf das zweite Band 61 zu fördern. Das zweite Band 61 läuft mit synchroner Geschwindigkeit, sobald alle über die ganze Länge der Gegenstände angeordnet Lichtschranken betätigt sind. Wenn sich zwischen zwei benachbarten länglichen Gegenständen 3 ein Abstand befindet, können die Lichtstrahlen ungehindert hindurchtreten mit der Folge, daß die Steuereinrichtung das zweite Band 61 stillsetzt. Da das erste Band 60 weiterläuft, werden die auf ihm liegenden Gegenstände gegen die auf dem zweiten Band 61 liegenden Gegenstände geschoben, so daß sie miteinander zur Anlage kommen. Sobald die Gegenstände aneinandergeschoben sind, werden die Lichtschranken wieder betätigt, und das Band 61 setzt sich wieder in Bewegung. Insgesamt ergibt sich durch diese Art der Steuerung ein schrittweises Vorrücken des Bandes 61, wie durch die kurzen aneinandergereihten Pfeile V angedeutet ist, während das erste Band 60 kontinuierlich bewegt wird, wie durch den einzelnen längeren Pfeil V angezeigt ist.

Im dritten Arbeitsschritt werden auf Befehl der Steuereinrichtung für die Lagenbildungseinrichtung beide Bänder stillgesetzt, wenn die auf dem zweiten Band 61 gebildete Lage 6 von länglichen Gegenständen eine vorbestimmte Breite hat, die auf die Breite des Behälters 5 abgestimmt ist. Dann werden die Transportbalken 1 so weit angehoben, daß sie die auf dem ersten Band 60 liegenden länglichen Gegenstände von diesem abheben. Dann wird der Vorschub des Bandes 61 kurzzeitig betätigt, wodurch sich die Lage 6 der auf ihm liegenden länglichen Gegenstände von den auf den Transportbalken 1 liegenden Gegenständen trennt. Die Lagenbreite ist so vorgewählt, daß die vertikale Trennfläche zwischen der Lage 6 und den auf den Transportbalken 1 verbleibenden Gegenständen auf die Schrägflächen 15 der Enden der Transportbalken 1 fällt.

Der Weitertransport der Lage 6 mit Zwischenlagen 21 zu dem Behälter 5 erfolgt in einem vierten Arbeitsschritt, und läuft genauso wie bei der Verladeeinrichtung gemäß dem ersten Ausführungsbeispiel ab.

Wenn der vor der Übernahme der Lage 6 durch die zweite Transportvorrichtung 9, 10 verbleibende Rest von länglichen Gegenständen auf dem ersten Band 60 eine kleinere Breite als die vorgewählte Lagenbreite hat, werden gleichzeitig mit der Übernahme der Lage 6 auch die neuen, in der Zwischenzeit auf dem Rollgang 2 bereitgestellten Gegenstände mittels der ersten Transportvorrichtung auf das Band 60 gebracht, wobei gleichzeitig die Restgegenstände von dem Band 60 auf das Band 61 gefördert werden. Der vorbeschriebene Vorgang ist in der Zeichnung beim dritten und vierten Arbeitsschritt dargestellt. Ist die Breite der Restgegenstände auf Band 60 hingegen gleich oder größer als die vorgewählte Lagenbreite, so erfolgt ein Transportzyklus der zweiten Transportvorrichtung 9, 10, ohne daß weitere Gegenstände von dem Rollgang 2 zum ersten Band 60 gefördert werden.

Die erste Transportvorrichtung und die zweite Transportvorrichtung 9, 10 können bei beiden Ausführungsbeispielen einen gemeinsamen Fahrantrieb zur Bewegung in horizontaler Richtung, jedoch getrennte Hubantriebe, haben. Ferner kann die Oberfläche des ersten Bandes 60 einen geringeren Reibungskoeffizienten als die Oberfläche des zweiten Bandes 61 haben, so daß die länglichen Gegenstände auf dem ersten Band leicht ausgerichtet und verschoben werden können und das zweite Band einen relativ hohen Widerstand gegen eine Relativverschiebung aufweist.

Bei einer modifizierten Ausführungsform der erfindungsgemäßen Verladeeinrichtung nach dem zweiten Ausführungsbeispiel kann das Transportband 60 bis zum Rollgang 2 hin verlängert sein und eine Hub- oder Kippbewegung in vertikaler Richtung ausführen, so daß es durch eine solche Hub- oder Kippbewegung die länglichen Gegenstände 3 von dem Rollgang 2 übernehmen und anschließend zum Band 61 fördern kann. Anstelle der Transportbalken 1 sind dann in Transportrichtung stationär angeordnete, eine vertikale Bewegung ausführende Hubbalken vorgesehen, die zum Trennen der Lage einen Vertikalhub ausführen.

Schließlich ist noch darauf hinzuweisen, daß die erfindungsgemäße Verladeeinrichtung sowohl nach dem ersten als auch nach dem zweiten Ausführungsbeispiel auch zum Transportieren von Langgutstücken in der umgekehrten Richtung, d. h. zum Entstapeln von Paketen von Langgutstücken, verwendet werden kann.

## Patentansprüche

1. Selbsttätig arbeitende Einrichtung zum Verladen von länglichen Gegenständen (3) von einem Bereitstellungsort (2) in ein Behältnis (5), mit

a) einer ersten Transportvorrichtung (1) zum Transportieren der länglichen Gegenstände (3) in einer quer zu ihrer Längserstreckung verlaufenden Transportrichtung (T) vom Bereitstellungsort (2) zu einer Einrichtung (4) zur Bildung von eine vorgegebene Breite aufweisenden Lagen (6) der ausgerichteten und seitlich aneinanderliegenden länglichen Gegenstände (3),

b) einer zweiten Transportvorrichtung (9) zum lagenweisen Transportieren der länglichen Gegenstände (3) von der Lagenbildungseinrichtung (4) zu dem Behältnis (5), wobei die zweite Transportvorrichtung (9) mindestens zwei Transportarme (10) hat, die in Transportrichtung (T) ausgerichtet und durch eine Antriebseinrichtung (56, 58) in und entgegen der Transportrichtung (T) bewegbar sowie hochfahr- und absenkbar sind,

dadurch gekennzeichnet, daß die Lagenbildungseinrichtung ein ortsfestes Auflager (4) mit einer Auflagefläche aufweist, deren Breite so gewählt ist, daß auf ihr gerade so viele längliche Gegenstände (3) nebeneinander Platz haben, wie eine Lage (6) eines in dem Behältnis (5) zu bildenden Stapels (12) längliche Gegenstände (3) hat, und die erste Transportvorrichtung mindestens zwei Balken (1) zum Transportieren der länglichen Gegenstände (3) vom Bereitstellungsort (2) in Richtung quer zu ihrer Längserstreckung zu dem ortsfesten Auflager (4) aufweist, welche Balken (1) in Transportrichtung (T) ausgerichtet und durch eine Antriebseinrichtung (55, 57) in und entgegen der Transportrichtung (T) bewegbar sowie hochfahr- und absenkbar sind.

2. Verladeeinrichtung nach Anspruch 1, dadurch gekennzeichnet, daß eine Einrichtung (7, 8) zum Ausrichten und Raffen von länglichen Gegenständen (3) derart, daß sie parallel zur Längsachse des Behältnisses (5) verlaufen und seitlich aneinanderliegen, vorgesehen ist, die einen ortsfesten Anschlag (7) zum Zusammenschieben der auf den Transportbalken (1) liegenden länglichen Gegenständen (3) quer zu ihrer Längserstreckung aufweist, an welchem Anschlag (7) die Transportbalken (1) in oder entgegen der Transportrichtung (T) vorbeibewegbar sind, wobei der Anschlag (7) die auf ihnen liegenden länglichen Gegenstände (3) relativ zu den Transportbalken (1) festhält.

3. Verladeeinrichtung nach Anspruch 2, dadurch gekennzeichnet, daß die Ausricht- und Raffeinrichtung einen weiteren Anschlag (8) zwischen dem Bereitstellungsort (2) und dem ortsfesten Auflager (4) aufweist, welcher derart angeordnet ist, daß seine Anschlagfläche vertikal verläuft und in Transportrichtung (T) gerichtet ist, und die Transportbalken (1) so weit hochfahrbar sind, daß die auf ihnen liegenden länglichen Gegenstände (3) in Transportrichtung (T) über diesen weiteren Anschlag (8) hinwegbewegbar sind.

4. Verladeeinrichtung nach einem der vorhergehenden Ansprüche, dadurch gekennzeichnet, daß die Auflagefläche des ortsfesten Auflagers (4) in der Breite vergrößer- oder verkleinerbar ist.

5. Verladeeinrichtung nach einem der vorhergehenden Ansprüche, dadurch gekennzeichnet, daß wenigstens eine die Auflagefläche des ortsfesten Auflagers (4) in ihrer Breitenausdehnung begrenzende Kante (15) abgeschrägt ist.

6. Selbsttätig arbeitende Einrichtung zum Verladen von länglichen Gegenständen (3) von einem Bereitstellungsort (2) in ein Behältnis (5), mit

a) einer ersten Transportvorrichtung (1) zum Transportieren der länglichen Gegenstände (3) in einer quer zu ihrer Längserstreckung verlaufenden Transportrichtung (T) vom Bereitstellungsort (2) zu einer Einrichtung (60, 61) zum Ausrichten und Raffen der länglichen Gegenstände (3) derart, daß sie parallel zur Längsachse des Behältnisses (5) verlaufen und seitlich aneinanderliegen, und

b) einer zweiten Transportvorrichtung (9) zum lagenweisen Transportieren der länglichen Gegenstände von einer Einrichtung (61), durch die eine vorgegebene Breite aufweisende Lagen (6) der ausgerichteten und seitlich aneinanderliegenden länglichen Gegenstände (3) gebildet werden, zu dem Behältnis (5), wobei die zweite Transportvorrichtung (9) mindestens zwei Arme (10) hat, die in Transportrichtung (T) ausgerichtet und durch eine Antriebseinrichtung in und entgegen der Transportrichtung (T) bewegbar sowie hochfahr- und absenkbar sind,

dadurch gekennzeichnet, daß die Ausricht- und Raffeinrichtung wenigstens zwei (ein erstes und ein zweites) in Transportrichtung (T) hintereinander geschaltete Transportbänder (60, 61) aufweist, die intermittierend mit gleicher Geschwindigkeit in Transportrichtung (T) bewegbar sind und von denen das erste, näher am Bereitstellungsort (2) angeordnete Band (60) in Betrieb längliche Gegenstände (3) von der ersten Transportvorrichtung (1) übernimmt und nacheinander auf das zweite Band (61) fördert, von dem sie durch die zweite Transportvorrichtung (9) lagenweise abtransportierbar sind, und die Ausricht- und Raffeinrichtung ferner eine den Betrieb des zweiten Bandes (61) steuernde Einrichtung aufweist, auf deren Befehle hin das zweite Band (61) stillsetzbar ist, während das erste Band (60) sich weiterbewegt, wenn die auf dem ersten Band (60) liegenden länglichen Gegenstände (3) unausgerichtet sind oder einen seitlichen Abstand voneinander haben, und auf deren Befehle hin sich das zweite Band (61) mit derselben Geschwindigkeit wie das erste Band (60) wieder bewegt, wenn die vom ersten Band (60) auf das zweite Band (61) transportierten länglichen Gegenstände (3) ausgerichtet sind und seitlich aneinanderliegen.

7. Verladeeinrichtung nach Anspruch 6, dadurch gekennzeichnet, daß die Lagenbildungseinrichtung das zweite Transportband (61) und eine Steuereinrichtung aufweist, auf deren Befehle hin beide Bänder (60, 61) stillsetzbar sind, wenn die auf dem zweiten Band (61) gebildete Lage (6) von länglichen Gegenständen (3) eine vorgestimmte Breite erreicht hat, die erste Transportvorrichtung (1) betätigbar ist, um die auf dem ersten Band (60) liegenden länglichen Gegenstände (3) von ihm hochzuheben, und das zweite Transportband (61) kurzzeitig wieder in Gang setzbar ist, um die gebildete Lage (6) von länglichen Gegenständen (3) von den auf der ersten Transportvorrichtung (1) liegenden länglichen Gegenständen (3) zu trennen, wonach die zweite Transportvorrichtung (9) die Lage (6) von länglichen Gegenständen (3) von dem zweiten Band (61) abhebt und wegtransportiert und die erste Transportvorrichtung (1) die auf ihr liegenden länglichen Gegenstände (3) wieder auf das erste Band (60) absenkt.

8. Verladeeinrichtung nach Anspruch 6 oder 7, dadurch gekennzeichnet, daß die Steuereinrichtung der Raff- und Ausrichteinrichtung mehrere über die Länge der länglichen Gegenstände verteilte Lichtschranken (62) zwischen den beiden Bändern (60, 61) aufweist.

9. Verladeeinrichtung nach einem der Ansprüche 6 bis 8, dadurch gekennzeichnet, daß die erste Transportvorrichtung mindestens zwei in Transportrichtung (T) ausgerichtete Balken (1) aufweist, die über und unter das Niveau des Bereitstellungsortes (2) und das Niveau der Transportbänder (60, 61) anhebbar und absenkbar und in und entgegen der Transportrichtung (T) bewegbar sind, wobei die vom Bereitstellungsort (2) abgekehrten Enden der Transportbalken (1) oben abgeschrägt sind und die Transportbalken (1) in eine Stellung bewegbar sind, in der die vertikale Trennebene zwischen der auf dem zweiten Transportband (61) gebildeten Lage (6) von länglichen Gegenständen (3) durch die Schrägflächen (15) der vom Bereitstellungsort (2) abgekehrten Enden der Transportbalken (1) geht.

10. Verladeeinrichtung nach einem der vorhergehenden Ansprüche, dadurch gekennzeichnet, daß die erste Transportvorrichtung (1) und die zweite Transportvorrichtung (9) einen gemeinsamen Antrieb für eine Bewegung in horizontaler Richtung und getrennte Antriebe für eine Bewegung in vertikaler Richtung haben.

11. Verladeeinrichtung nach einem der Ansprüche 6 bis 10, dadurch gekennzeichnet, daß die Oberfläche des zweiten Transportbandes (61) einen höheren Reibungskoeffizienten als die Oberfläche des ersten Transportbandes (60) hat.

12. Verladeeinrichtung nach einem der Ansprüche 6 bis 8, 10 und 11, dadurch gekennzeichnet, daß das erste Transportband (60) bis zu dem Bereitstellungsort (2) verlängert ist und in vertikaler Richtung heb- oder kippbar ist, um am Bereitstellungsort die länglichen Gegenstände zu übernehmen, und daß ein in Transportrichtung (T) stationär angeordneter Hubbalken vorgesehen ist, der durch einen Vertikalhub die auf dem ersten Transportband (60) liegenden Gegenstände (3) abhebt, um sie von der auf dem zweiten Transportband (61) gebildeten Lage (6) zu trennen.

13. Verladeeinrichtung nach einem der vorhergehenden Ansprüche, dadurch gekennzeichnet, daß die Transportarme (10) derart kippbar sind, daß ihre freien Enden höher als ihre hinteren Enden anhebbar sind, und an den hinteren Enden der Transportarme (10) auf deren Oberseite ein Anschlag (17) zum Sichern von auf den Transportarmen (10) liegenden länglichen Gegenständen (3) gegen Herabfallen vorgesehen ist.

14. Verladeeinrichtung nach Anspruch 13, dadurch gekennzeichnet, daß die Transportarme (10) auf ihrer Ober- und ihrer Unterseite eben sind und ihre Oberflächen auf der Ober- und der Unterseite einen spitzen Winkel an den freien Enden einschließen.

15. Verladeeinrichtung nach einem der vorhergehenden Ansprüche, gekennzeichnet ferner durch ein in dem Behältnis (5) hochfahr- und absenkbares Auflager (11), auf welchem die länglichen Gegenstände (3) von den Transportarmen (10) lagenweise aufstapelbar sind und das schrittweise um jeweils die Höhe einer Lage (6) von länglichen Gegenständen (3) in dem Behältnis (5) absenkbar ist, und daß das Behältnis (5) in seinem Boden eine Öffnung hat, durch die das Auflager (11) hindurchbewegbar ist.

16. Verladeeinrichtung nach einem der Ansprüche 1 bis 14, dadurch gekennzeichnet, daß ein hochfahr- und absenkbares Auflager (11) zur Aufnahme des Behältnisses (5) vorgesehen ist, in welchem die länglichen Gegenstände (3) von den Transportarmen (10) lagenweise aufstapelbar sind, das Auflager (11) abwechselnd so weit absenkbar ist, daß die auf den Transportarmen (10) liegenden länglichen Gegenstände (3) über eine Seitenwand des Behältnisses (5) bewegbar sind, und so weit anhebbar ist, daß die auf den Transportarmen (10) liegenden länglichen Gegenstände (3) auf dem Boden des Behältnisses (5) oder ggf. auf der jeweils obersten Lage (6) des in dem Behältnis (5) gebildeten Stapels (12) ablegbar sind, und die Seitenwand des Behältnisses (5) für jeden Transportarm (10) eine Ausnehmung hat, in welcher der jeweilige Transportarm (10) beim Hochfahren und Absenken des Auflagers (11) eingreift.

17. Verladeeinrichtung nach einem der vorhergehenden Ansprüche, dadurch gekennzeichnet, daß jede Lage (6) von länglichen Gegenständen (3) des in dem Behältnis (5) gebildeten Stapels (12) auf einer dünnen Zwischenlage (21) aufliegt, und die Transportarme (10) jeweils eine Zwischenlage (21) aus einem Zwischenlagenmagazin (13) aufnehmen, bevor sie die jeweilige Lage (6) von länglichen Gegenständen (3) von dem ortsfesten Auflager (4) oder dem zweiten Transportband (61) abheben.

18. Verladeeinrichtung nach Anspruch 17, dadurch gekennzeichnet, daß die Zwischenlagen (21) aus Papier bestehen oder Kunststoff-Folien sind.

19. Verladeeinrichtung nach einem der Ansprüche 1 bis 5 und 9 bis 18, dadurch gekennzeichnet, daß die Transportbalken (1) auf ihrer Oberseite mit einem oberflächenschonenden Gleitbelag, z. B. aus Kunststoff oder Graphit, versehen sind.

20. Verwendung der Verladeeinrichtung nach einem der vorhergehenden Ansprüche zum Verladen von länglichen Gegenständen (3) von einem Behältnis (5) zu einem Aufnahmeort (2).

**Claims**

1. Automatically operating apparatus for loading elongated articles (3) from a readiness location (2) into a container (5), comprising

a) a first transport means (1) for transporting the elongated articles (3) in a transport direction (T) extending transversely of their longitudinal extent from the readiness location (2) to a means (4) for forming layers (6) having a predetermined width of the aligned and laterally contiguous elongated articles (3),

b) a second transport means (9) for layer-like transporting of the elongated articles (3) from the layer-formation means (4) to the container (5), the second transport means (9) having at least two transport arms (10) which are aligned in the transport direction (T) and by a drive means (56, 58) are adapted to be moved in and oppositely to the transport direction (T) as well as raised and lowered,

characterized in that the layer-formation means comprises a stationary support (4) with a support surface whose width is chosen so that on it the number of elongated articles (3) which have room adjacent each other is exactly the same as the number of elongated articles (3) which a layer (6) of a stack (12) to be formed in the container (5) has, and that the first transport means comprises at least two beams (1) for transporting the elongated articles (3) from the readiness location (2) in a direction transversely of their longitudinal extent to the stationary support (4), said beams (1) being aligned in the transport direction (T) and by a drive means (55, 57) adapted to be moved in and oppositely to the transport direction (T) as well as raised and lowered.

2. Loading apparatus according to claim 1, characterized in that a means (7, 8) is provided for aligning and gathering together elongated articles (3) such that they extend parallel to the longitudinal axis of the container (5) and are laterally contiguous, said means comprising a stationary stop (7) for pushing together the elongated articles (3) lying on the transport beams (1) transversely of their longitudinal extent, the transport beams (1) being movable past the stop (7) in or oppositely to the transport direction (T), the stop (7) fixedly holding the elongated articles (3) lying thereon relatively to the transport beams (1).

3. Loading apparatus according to claim 2, characterized in that the alignment and gathering means comprises a further stop (8) between the readiness location (2) and the stationary support (4) which is disposed in such a manner that its stop face extends vertically and is directed in the transport direction (T), and the transport beams (1) are adapted to be raised to such an extent that the elongated articles (3) lying thereon are movable in the transport direction (T) beyond said further stop (8).

4. Loading apparatus according to any one of the preceding claims, characterized in that the support surface of the stationary support (4) has a width which can be increased or decreased.

5. Loading apparatus according to any one of the preceding claims, characterized in that at least one edge (15) limiting the support surface of the stationary support (4) in its width extent is bevelled.

6. Automatically operating apparatus for loading elongated articles (3) from a readiness location (2) into a container (5), comprising

a) a first transport means (1) for transporting the elongated articles (3) in a transport direction (T) extending transversely of their longitudinal extent from the readiness location (2) to a means (60, 61) for aligning and gathering the elongated articles (3) in such a manner that they extend parallel to the longitudinal axis of the container (5) and are laterally contiguous, and

b) a second transport means (9) for layerwise transporting of the elongated articles from a means (61) by which layers (6) having a predetermined width are formed of the aligned and laterally contiguous elongated articles (3) to the container (5), the second transport means (9) having at least two arms (10) which are aligned in the transport direction (T) and by a drive means are adapted to be moved in and oppositely to the transport direction (T) as well as raised and lowered,

characterized in that the aligning and gathering means comprise at least two (a first and a second) conveying belts (60, 61) which are connected in series in the transport direction (T) and which are movable intermittently with the same speed in the transport direction (T) and of which the first belt (60) disposed closer to the radiness location (2) in operation takes over articles (3) from the first transport means (1) and conveys them consecutively to the second belt (61) from which they are transported in layers by the second transport means (9), and the aligning and gathering means further comprises a means which controls the operation of the second belt (61) and on the commands of which the second belt (61) can be stopped whilst the first belt (60) continues moving when the elongated articles (3) disposed on the first belt (60) are not aligned or are laterally spaced apart, and on the commands of which the second belt (61) continues to move with the same speed as the first belt (60) when the elongated articles (3) transported by the first belt (60) to the second belt (61) are aligned and laterally contiguous.

7. Loading apparatus according to claim 6, characterized in that the layer-formation means comprises the second conveying belt (61) and a control means on the commands of which both belts (60, 61) are stopped when the layer (6) of elongated articles (3) formed on the second belt (61) has reached a predetermined width, the first transport means (1) is actuable to raise the elongated articles (3) lying on the first belt (60) from the latter and the second conveying belt (61) can be briefly restarted again to separate the formed layer (6) of elongated articles (3) from the elongated articles (3) lying on the first transport means (1), whereafter the second transport means (9) lifts the layer (6) of elongated articles (3) from the second belt (61) and conveys said layer further and the first transport means (1) lowers the elongated articles (3) disposed thereon onto the first belt (60) again.

8. Loading apparatus according to claim 6 or 7, characterized in that the control means of the gathering and aligning means comprises a plurality of light barriers (62) distributed over the length of the elongated articles between the two belts (60, 61).

9. Loading apparatus according to any one of claims 6 to 8, characterized in that the first transport means comprises at least two beams (1) which are aligned in the transport direction (T) and which can be raised and lowered above and below the level of the readiness location (2) and the level of the conveying belts (60, 61) and are movable in and oppositely to the transport direction (T), the ends of the transport beams (1) remote from the readiness location (2) being bevelled at the top and the transport beams (1) movable into a position in which the vertical separating plane between the layer (6) of elongated articles (3) formed on the second conveying belt (61) passes through the bevelled faces (15) of the ends of the transport beams (1) remote from the readiness location (2).

10. Loading apparatus according to any one of the preceding claims, characterized in that the first transport means (1) and the second transport means (9) have a common drive for a movement in the horizontal direction and separate drives for a movement in the vertical direction.

11. Loading apparatus according to any one of claims 6 to 10, characterized in that the surface of the second conveying belt (61) has a greater coefficient of friction than the surface of the first conveying belt (60).

12. Loading apparatus according to any one of claims 6 to 8, 10 and 11, characterized in that the first conveying belt (60) is extended up to the readiness location (2) and adapted to be raised or tilted in the vertical direction to take over at the readiness location the elongated articles, and that a lifting beam is provided which is disposed stationarily in the transport direction (T) and which by a vertical stroke lifts the articles (3) lying on the first conveying belt (60) to separate them from the layer (6) formed on the second conveying belt (61).

13. Loading apparatus according to any one of the preceding claims, characterized in that the transport arms (10) are adapted to be tilted such that their free ends can be raised higher than their rear ends and at the rear ends of the transport arms (10) on the supper side thereof a stop (17) is provided for securing against dropping out elongated articles (3) lying on the transport arms (10).

14. Loading apparatus according to claim 13, characterized in that the transport arms (10) are planar on their upper and lower sides and their surfaces on the upper and lower sides include an acute angle at the free ends.

15. Loading apparatus according to any one of the preceding claims, characterized further by a support (11) which can be raised and lowere in the container (5) and on which the elongated articles (3) can be stacked in layers by the transport arms (10) and which is lowerable stepwise in each case by the height of a layer (6) of elongated articles (3) in the container (5), and that the container (5) in its bottom has an opening through which the support (11) is movable.

16. Loading apparatus according to any one of claims 1 to 14, characterized in that a raisable and lowerable support (11) for receiving the container (5) is provided and in the latter the elongated articles (3) can be stacked in layers by the transport arms (10), the support (11) can be alternately lowered to an extent that the elongated articles (3) lying on the transport arms (10) are movable beyond a side wall of the container (5) and raised to an extent such that the elongated articles (3) lying on the transport arms (10) can be deposited on the bottom of the container (5) or possibly on the uppermost layer (6) of the stack (12) formed in the container (5), and the side wall of the container (5) has for each transport arm (10) a recess in which the respective transport arm (10) engages when the support (11) is raised and lowered.

17. Loading apparatus according to any one of the preceding claims, characterized in that each layer (6) of elongated articles (3) of the stack (12) formed in the container (5) lies on a thin intermediate layer (21) and the transport arms (10) receive from an intermediate layer magazine (13) an intermediate layer (21) each time before they lift the respective layer (6) of elongated articles (3) from the stationary support (4) or the second conveying belt (61).

18. Loading apparatus according to claim 17, characterized in that the intermediate layers (21) consist of paper or plastic foils.

19. Loading apparatus according to any one of claims 1 to 5 and 9 to 18, characterized in that the transport beams (1) are provided on their upper side with a surface-protecting sliding coating, for example plastic or graphite.

20. Use of the loading apparatus according to any ·one of the preceding claims for loading elongated articles (3) from a container (5) to a reception location (2).

**Revendications**

1.. Dispositif automatique pour le chargement d'objets longitudinaux (3) d'un poste d'alimentation (2) dans un casier (5), avec :

a) un premier dispositif (1), prévu pour transporter les objets longitudinaux (3), dans un sens (T) transversal à leur sens longitudinal, d'un poste d'alimentation (2) vers un dispositif (4) de formation d'une couche (6), d'une largeur prédéfinie, composée d'objets longitudinaux (3) alignés et juxtaposés latéralement,

b) un second dispositif (9), prévu pour transporter les objets longitudinaux (3), disposés en couches, du dispositif de formation (4) dans le casier (5), ce second dispositif (9) présentant au moins deux bras (10), orientés dans le sens de transport (T) et qu'un système d'entraînement (56, 58) permet de relever, d'abaisser et de déplacer dans le sens (T), ou dans le sens contraire, caractérisé en ce que le dispositif de formation des couches présente un support stationnaire (4) avec une surface d'appui, dont la largeur est choisie de manière que le nombre d'objets longitudinaux (3), qu'elle peut recevoir, soit égal à celui d'une couche (6) d'une pile (12) à former dans le casier (5), le premier dispositif de transport présentant au moins deux barres (1) pour l'acheminement des objets longitudinaux (3), dans un sens transversal au sens longitudinal de ces derniers, du poste d'alimentation (2) vers le support stationnaire (4), et·ces barres (1), orientées dans le sens de transport (T), pouvant être relevées, abaissées et déplacées dans le sens précité (T), ou dans le sens inverse, par un système d'entraînement (55, 57).

2. Dispositif de chargement suivant la revendication 1, caractérisé par un dispositif (7, 8) prévu pour l'alignement et le serrage des objets longitudinaux (3), de manière que ces derniers soient parallèles à l'axe longitudinal du casier (5) et qu'ils soient juxtaposés latéralement, ce dispositif présentant une butée stationnaire (7), qui permet de pousser les uns contre les autres les objets (3), situés sur les barres de transport (1), dans un sens transversal à leur sens longitudinal, et devant laquelle les barres (1) peuvent se déplacer, dans le sens de transport (T) ou dans le sens inverse, cette butée (7) maintenant par rapport aux barres (1) les objets longitudinaux (3) qu'elles supportent.

3. Dispositif de chargement suivant la revendication 2, caractérisé en ce que le dispositif d'alignement et de serrage présente une autre butée (8), comprise entre le poste d'alimentation (2) et le support stationnaire (4) et montée de manière que sa surface d'appui se situe à la verticale et soit orientée dans le sens de transport (T), les barres (1) pouvant être relevées jusqu'à ce que les objets longitudinaux (3), qu'elles supportent, puissent passer sur cette seconde butée (8) dans le sens de transport (T).

4. Dispositif de chargement suivant l'une quelconque des revendications précédentes, caractérisé en ce que la largeur de la surface d'appui du support stationnaire (4) peut être augmentée ou réduite.

5. Dispositif de chargement suivant l'une quelconque des revendications précédentes, caractérisé par le chanfreinage d'un bord (15) au moins, limitant la surface d'appui du support stationnaire (4) sur sa largeur.

6. Dispositif automatique de chargement d'objets longitudinaux (3) d'un poste d'alimentation (2) dans un casier (5), avec :

a) un premier dispositif (1), prévu pour transporter les objets longitudinaux (3), dans un sens (T) transversal à leur sens longitudinal, d'un poste d'alimentation (2) vers un dispositif (60, 61) d'alignement et de serrage des objets (3), de manière que ces derniers soient parallèles à l'axe longitudinal du casier (5) et qu'ils soient juxtaposés latéralement,

b) un second dispositif (9), prévu pour transporter les objets longitudinaux, disposés en couches, d'un dispositif (61) qui permet de former une couche (6) d'une largeur prédéfinie, composée des objets longitudinaux (3) alignés et juxtaposés latéralement, dans le casier (5), ce second dispositif (9) présentant au moins deux bras (10), orientés dans le sens de transport (T) et qu'un système d'entraînement permet de relever, d'abaisser et de déplacer dans le sens (T), ou dans le sens inverse, caractérisé en ce que le dispositif d'alignement et de serrage présente au moins deux (une première et une deuxième) bandes transporteuses (60, 61) qui sont montées l'une derrière l'autre dans le sens de transport (T), peuvent se déplacer par intermittence dans le sens (T), à la même vitesse, et dont la première (60), la plus proche du poste d'alimentation (2), reprend en cours de service les objets longitudinaux (3) du premier dispositif de transport (1), pour les acheminer successivement sur la seconde bande (61), à partir de laquelle ils sont évacués en couche par le second dispositif de transport (9), le dispositif d'alignement et de serrage présentant par ailleurs un système de commande pour le fonctionnement de la seconde bande (61), dont les ordres provoquent l'arrêt de cette dernière, alors que la première bande (60) poursuit son mouvement, si les objets longitudinaux (3), qu'elle supporte, ne sont pas alignés ou présentent un écart latéral, et sur les ordres duquel la seconde bande (61) poursuit son mouvement à la même vitesse que la première (60), si les objets longitudinaux (3), transportés par cette dernière (60) sur la seconde bande (61), sont alignés et juxtaposés latéralement.

7. Dispositif de chargement suivant la revendication 6, caractérisé en ce que le dispositif de formation de couches comporte la seconde bande transporteuse (61) et un système de commande, dont les ordres provoquent l'arrêt des deux bandes (60, 61), dès que la couche (6) d'objets longitudinaux (3), formée sur la seconde bande (61), à atteint une largeur prédéfinie, actionnent le premier dispositif de transport (1), pour soulever les objets longitudinaux (3), situés sur la première bande (60), et remettent temporairement en service la seconde bande de transport (61), pour séparer la couche formée (6) d'objets longitudinaux (3) des objets (3) situés sur le premier dispositif de transport (1), le second dispositif (9) soulevant alors la couche (6) d'objets longitudinaux (3) de la seconde bande (61) et les évacuant, et le premier dispositif (1) redéposant les objets (3), qu'il supporte, sur la première bande (60).

8. Dispositif de chargement suivant l'une des revendications 6 et 7, caractérisé en ce que le système de commande du dispositif d'alignement et de serrage présente plusieurs barrières lumineuses (62), réparties entre les deux bandes (60, 61) sur la longueur des objets longitudinaux.

9. Dispositif de chargement suivant l'une quelconque des revendications 6 à 8, caractérisé en ce que le premier dispositif de transport présente au moins deux barres (1), orientées dans le sens de transport (T), relevables et abaissables au-dessus et au-dessous du niveau du poste d'alimentation (2) et du niveau des bandes transporteuses (60, 61), et mobiles dans le sens (T), ou dans le sens inverse, les extrémités des barres (1), opposées au poste (2), étant chanfreinées sur leur partie supérieure, et ces barres (1) pouvant être amenées dans une position, dans laquelle le plan de partage vertical avec la couche (6) d'objets longitudinaux (3), formée sur la seconde bande de transport (61), passe par les chanfreins (15) des extrémités précitées des barres (1).

10. Dispositif de chargement suivant l'une quelconque des revendications précédentes, caractérisé en ce que le premier dispositif de transport (1) et le second (9) ont un entraînement commun pour un déplacement horizontal et des entraînements distincts pour un mouvement vertical.

11. Dispositif de chargement suivant l'une quelconque des revendications 6 à 10, caractérisé en ce que la surface de la seconde bande transporteuse (61) a un coefficient de frottement supérieur à celui de la surface de la première bande (60).

12. Dispositif de chargement suivant l'une quelconque des revendications 6 à 8, 10 et 11, caractérisé en ce que la première bande transporteuse (60) est prolongée jusqu'au poste d'alimentation (2) et peut s'élever ou basculer dans le sens vertical, pour reprendre les objets longitudinaux au poste précité, et en ce qu'une barre de levage, stationnaire dans le sens de transport (T), soulève par sa course verticale les objets longitudinaux (3), situés sur la première bande (60), afin de les séparer de la couche (6), formée sur la seconde bande (61).

13. Dispositif de chargement suivant l'une quelconque des revendications précédentes, caractérisé en ce que les bras (10) peuvent basculer, de manière que leurs extrémités libres arrivent à un niveau supérieur à celui de leurs extrémités arrières, ces dernières présentant sur leur face supérieure une butée (17), qui s'oppose à la chute de objets longitudinaux (3), situés sur les bras de transport (10).

14. Dispositif de chargement suivant la revendication 13, caractérisé en ce que les bras de transport (10) sont plans sur leurs face supérieure et inférieure, leurs surfaces supérieure et inférieure formant un angle aigu sur leurs extrémités libres.

15. Dispositif de chargement suivant l'une quelconque des revendications précédentes, caractérisé par un support (11), relevable et abaissable dans un casier (5), sur lequel les bras de transport (10) peuvent empiler par couche les objets longitudinaux (3), et qui peut être progressivement abaissé dans le casier (5), de la hauteur d'une couche (6) d'objets longitudinaux (3), et en ce que le fond du casier (5) présente une ouverture, prévue pour le passage du support (11).

16. Dispositif de chargement suivant l'une quelconque des revendications 1 à 14, caractérisé par un support (11) relevable et abaissable, prévu pour recevoir le casier (5) dans lequel les objets longitudinaux (3) sont empilés par couche par les bras de transport (10), et dans lequel le support (11) est animé d'un mouvement alternatif de descente, jusqu'à ce que les objets longitudinaux (3), situés sur les bras (10), puissent être amenés par une paroi latérale du casier (5), et de montée, jusqu'à ce que les objets (3), situés sur les bras (10), puissent être déposés sur le fond du casier (5) ou, éventuellement, sur la couche (6) supérieure de la pile (12), formée dans le casier (5), la paroi latérale de ce dernier (5) présentant un évidement pour chaque bras de transport (10), dans lequel s'engage le bras (10) correspondant avec les mouvements de descente et de montée du support (11).

17. Dispositif de chargement suivant l'une quelconque des revendications précédentes, caractérisé en ce que chaque couche (6) d'objets longitudinaux (3) de la pile (12), formée dans le casier (5), repose sur une mince couche intermédiaire (21), les bras de transport (10) recevant une couche (21) d'un magasin de couches intermédiaires (13), avant de soulever la couche correspondante (6) d'objets longitudinaux (3) du support stationnaire (4) ou de la seconde bande transporteuse (61).

18. Dispositif de chargement suivant la revendication 17, caractérisé en ce que les couches intermédiaires (21) sont en papier ou en film plastique.

19. Dispositif de chargement suivant l'une quelconque des revendications 1 à 5 et 9 à 18, caractérisé en ce que les barres de transport (1) sont munies sur leur face supérieure d'un revêtement de glissière protecteur, en plastique ou en graphite par exemple.

20. Utilisation du dispositif de chargement suivant l'une quelconque des revendications précédentes, pour le transport d'objets longitudinaux (3) d'un casier (5) vers un poste de réception (2).

1.SCHRITT

2.SCHRITT

3.SCHRITT

Fig. 1

*Fig. 2*

Fig. 3

Fig. 4

6. SCHRITT

7. SCHRITT

0 132 635

Fig. 5

Fig. 6

0 132 635

Fig. 7

0 132 635